# EUROPÄISCHE PATENTSCHRIFT

(11) **EP 3 187 773 B1**
(45) Veröffentlichungstag und Bekanntmachung des Hinweises auf die Patenterteilung: **16.10.2019**
(21) Anmeldenummer: 16207033.8
(22) Anmeldetag: 28.12.2016
(51) Int. Cl.: F21S 6/00, F21V 8/00, G02B 6/00, F21Y 115/10, F21Y 103/10, F21Y 101/00

(54) **LEUCHTKÖRPER UND STEHLEUCHTENANORDUNG**
LUMINOUS BODY AND FLOOR LAMP ASSEMBLY
CORPS LUMINEUX ET LAMPADAIRE

(30) Priorität: 28.12.2015 CH 19142015
(43) Veröffentlichungstag der Anmeldung: 05.07.2017
(73) Patentinhaber: Regent Beleuchtungskörper AG, 4053 Basel (CH)
(72) Erfinder: Reutter, Kornelius, 4056 Basel (CH); Dreyfus, Thierry, 4052 Basel (CH); Kretzer, David, M., 4053 Basel (CH)
(74) Vertreter: Latscha Schöllhorn Partner AG

(56) Entgegenhaltungen:
- EP-A1- 3 165 948
- WO-A1-2013/180737
- DE-U1-202005 015 855
- US-A- 6 002 079
- US-A1- 2006 062 016
- US-A1- 2009 161 355

## Beschreibung

### Technisches Gebiet

Die Erfindung betrifft eine Stehleuchtenanordnung mit mindestens einem Leuchtkörper gemäss dem Oberbegriff des unabhängigen Anspruchs 1.

Solche Leuchtkörper umfassen ein Leuchtmittel und eine Lichtverteilungsplatte, wobei die Lichtverteilungsplatte eine Oberfläche, eine der Oberfläche entsprechende Unterfläche und die Oberfläche mit der Unterfläche verbindende Randflächen aufweist. Das Leuchtmittel ist einer der Randflächen der Lichtverteilungsplatte zugeordnet, sodass vom Leuchtmittel abgestrahltes Licht durch die Randfläche in die Lichtverteilungsplatte einstrahlbar ist. Die Lichtverteilungsplatte umfasst eine Auslenkstruktur, mit der das vom Leuchtmittel abgestrahlte und durch die Randfläche in die Lichtverteilungsplatte eingestrahlte Licht umleitbar ist, sodass es durch die Oberfläche oder die Unterfläche der Lichtverteilungsplatte abgestrahlt wird. Leuchten mit solchen Leuchtkörpern können zum Ausleuchten von Arbeitsplätzen wie beispielsweise Tischoberflächen eingesetzt werden.

### Stand der Technik

Zur Beleuchtung von Räumen oder Arbeitsplätzen werden heutzutage Leuchten in unterschiedlichen auf den jeweiligen Anwendungszweck angepassten Ausführungsformen eingesetzt. Dabei wird zumeist angestrebt, mit den Leuchten Lichtverteilungskurven erzeugen zu können, die einer Ausleuchtung bei einer bestimmungsgemässen Verwendung der Leuchten möglichst gut entsprechen. Beispielsweise sind aus der US 2009/0161355 A1 eine Leseleuchte, aus der US 6,002,079 A ein dekoratives Leuchtelement, aus der WO 2013/180737 A1 eine bidirektionale Hintergrundlichtvorrichtung, aus der US 2006/0062016 A1 eine dünne Beleuchtungsvorrichtung, aus der DE 20 2005 015855 U1 eine Lampe und aus der EP 3 165 948 A1 eine Hintergrundlichtvorrichtung bekannt.

Unter anderem werden in Büros zur Ausleuchtung von Arbeitsplätzen beispielsweise auf Schreibtischen häufig Stand- beziehungsweise Stehleuchten eingesetzt, die ein Leuchtmittel und eine Lichtverteilungsplatte umfassen. Die Lichtverteilungsplatte dient dabei dazu, vom Leuchtmittel typischerweise horizontal abgestrahltes Licht für den bestimmungsgemässen Gebrauch der Leuchte umzuformen und typischerweise in die Vertikale umzuleiten. Häufig sind in solchen Stehleuchten das Leuchtmittel und die Lichtverteilungsplatte in einem Gehäuse angeordnet, das an einem Ständer befestigt ist. In vielen Stehleuchten wird das Licht zu einem gewissen Anteil als Indirektlicht nach oben beispielsweise an eine Decke und als Direktlicht nach unten auf den zugehörigen Arbeitsplatz abgestrahlt.

Stehleuchten der bekannten Art werden typischerweise vor oder seitlich des zugehörigen Arbeitsplatzes beziehungsweise des Schreib- oder Arbeitstischs aufgestellt. Bei Tischen werden sie insbesondere häufig nahe einer Ecke der Tischplatte oder mittig an eine Rückkante der Tischplatte aufgestellt.

Bei Stehleuchten der oben erwähnten Art stellt sich das Problem, dass das von der Leuchte erzeugte beziehungsweise abgestrahlte Licht den Arbeitsplatz nicht ideal ausleuchtet. Typischerweise leuchten solche Leuchten den Bereich des Arbeitsplatzes, nahe dem sie angeordnet sind, verhältnismässig gut aus, wohingegen entferntere Bereiche des Arbeitsplatzes beziehungsweise Tischs nicht ausreichend oder zufriedenstellen ausgeleuchtet sind. Zudem werden mit solchen Stehleuchten typischerweise auch Bereiche neben dem Arbeitsplatz ausgeleuchtet, die nicht primär der bestimmungsgemässen Beleuchtung dienen, was den Wirkungsgrad der Leuchten reduziert.

Der vorliegenden Erfindung liegt daher die Aufgabe zugrunde, eine Leuchte beziehungsweise ein Bauteil für eine Leuchte oder eine Leuchtenanordnung vorzuschlagen, die in einer Stehleuchtenanordnung eine effiziente, gleichmässige und möglichst vollständige Ausleuchtung eines Arbeitsplatzes wie insbesondere eines Schreib- oder Arbeitstischs ermöglicht.

### Darstellung der Erfindung

Ein Leuchtkörper als ein Bauteil einer erfindungsgemässen Leuchtenanordnung umfasst ein erstes Leuchtmittel und eine Lichtverteilungsplatte. Die Lichtverteilungsplatte weist eine Oberfläche, eine der Oberfläche entsprechende Unterfläche und die Oberfläche mit der Unterfläche verbindende Randflächen auf. Das erste Leuchtmittel ist einer ersten der Randflächen der Lichtverteilungsplatte zugeordnet, sodass vom ersten Leuchtmittel abgestrahltes Licht durch die erste Randfläche in die Lichtverteilungsplatte einstrahlbar ist. Die Lichtverteilungsplatte umfasst eine Auslenkstruktur, mit der das vom ersten Leuchtmittel abgestrahlte und durch die erste Randfläche in die Lichtverteilungsplatte eingestrahlte Licht umleitbar ist, sodass es durch die Oberfläche oder die Unterfläche der Lichtverteilungsplatte abgestrahlt wird. Die Auslenkstruktur der Lichtverteilungsplatte ist schräg zu einer ersten Hauptabstrahlrichtung des ersten Leuchtmittels ausgerichtet.

Der Leuchtkörper ist erfindungsgemäss ein Bauteil einer Stehleuchtenanordnung. Insbesondere kann er als Leuchtenkopf einer Stehleuchte ausgebildet sein.

Die Lichtverteilungsplatte kann bevorzugterweise transparent oder im Wesentlichen transparent sein. Sie kann so als Optik in einer den Leuchtkörper umfassenden Leuchte eingesetzt sein. Transparente Materialien, die für die Verwendung in einer Lichtverteilungsplatte geeignet sind, können Glas und insbesondere Kunststoffe sein. Auch kann die Lichtverteilungsplatte einen transparenten Grundkörper aufweisen, der mit einer lichtformenden Folie versehen ist.

Der Begriff "transparent" kann sich in diesem Zusammenhang auf lichtdurchlässig beziehungsweise eine zumindest teilweise Durchlässigkeit für sichtbares Licht beziehen. Der Begriff "lichtdurchlässig" kann sich dabei insbesondere auf eine gedämpfte oder ungedämpfte Durchlässigkeit des mittels der Leuchtmittel erzeugten Lichts beziehen.

Das erste sowie auch die unten näher beschriebenen weiteren Leuchtmittel können jeweils einer der Randflächen zugeordnet sein, indem sie benachbart zur oder anliegend an die zugehörige Randfläche angeordnet sind. Dabei kann es vor allem von Bedeutung sein, dass das Leuchtmittel Licht auf die zugehörige Randfläche strahlt, sodass es durch diese hindurch in die Lichtverteilungsplatte eindringt.

Die Auslenkstruktur kann dazu ausgestaltet sein, zu verhindern, dass das in die Lichtverteilungsplatte eingestrahlte Licht diese geradlinig durchdringt. Vielmehr kann mit der Auslenkstruktur das die Lichtverteilungsplatte durchdringende also quer und beispielsweise horizontal durch die Lichtverteilungsplatte strömende Licht umgeleitet beziehungsweise in eine Abstrahlrichtung abgelenkt werden.

Unter dem Begriff "Platte" wird im Zusammenhang mit der Erfindung ein im Wesentlichen quader- oder würfelförmiger Körper verstanden. Insbesondere kann eine Platte ein Quader sein, der Rechtecke als Aussenflächen umfasst, die wesentlich länger als breit sind. Dadurch kann der Quader verhältnismässig flach sein beziehungsweise seine Tiefe oder Dicke kann im Vergleich zu seiner Breite und Länge verhältnismässig klein sein.

Die Begriffe "Oberfläche" und "Unterfläche" im Zusammenhang mit der Lichtverteilungsplatte können sich auf eine in bestimmungsgemässer Aufstellung oberen beziehungsweise unteren, planen oder unebenen Fläche der Lichtverteilungsplatte beziehen. Dabei kann bei der Verwendung des Leuchtkörpers in einer Leuchte die Oberfläche der Lichtverteilungsplatte auch unten, geneigt oder seitlich angeordnet sein. Diese Begriffe sind also nicht bezüglich einer Zielposition des Leuchtkörpers als einschränkend zu verstehen, sondern lassen einen Einsatz des Leuchtkörpers in beliebiger Ausrichtung zu. Die Oberfläche und die Unterfläche können auch eine unterschiedliche Grundform aufweisen.

Der Begriff "Hauptabstrahlrichtung" wird im Zusammenhang der vorliegenden Offenbarung als die Richtung verstanden, in die ein Leuchtmittel hauptsächlich, mehrheitlich oder bestimmungsgemäss abstrahlt. Typischerweise strahlen Leuchtmittel Licht zumindest in einem gewissen Ausmass auch in andere Richtungen als der Hauptabstrahlrichtung ab (Streuung). Als Hauptabstrahlrichtung eines Leuchtmittels kann die Richtung verstanden werden, in die das Leuchtmittel zu einem bestimmten Zweck leuchten soll und dazu ausgebildet ist. Im Zusammenhang mit dem Leuchtkörper kann sich die Hauptabstrahlrichtung insbesondere auf einer Richtung vom Leuchtmittel auf die zugehörige Randfläche beziehen. Bei ebenen oder quasi ebenen Randflächen ist die Hauptabstrahlrichtung der Leuchtmittel zweckmässigerweise orthogonal zu den Randflächen.

Der Begriff "schräg ausgerichtet" im Zusammenhang mit der Auslenkstruktur bezieht sich insbesondere auf eine Ausrichtung, die eine schräge Umleitung des in die Hauptabstrahlrichtung strömenden Lichts ermöglicht. Dabei kann die Auslenkstruktur beispielsweise diagonal oder quasi diagonal zur Hauptabstrahlrichtung des Leuchtmittels ausgerichtet sein. Bei einer Ausgestaltung der Auslenkstruktur mit Reflektorbeziehungsweise Refraktorflächen können diese Flächen einen Winkel zur Hauptabstrahlrichtung beschreiben, der von einem rechten Winkel abweicht. Beispielsweise kann dieser Winkel etwa 45° betragen.

Indem erfindungsgemäss die Auslenkstruktur der Lichtverteilungsplatte schräg zur ersten Hauptabstrahlrichtung des ersten Leuchtmittels ausgerichtet ist, kann erreicht werden, dass die Lichtverteilungsplatte effizient das Licht so umleitet, dass es asymmetrisch und insbesondere doppelt oder dreifach asymmetrisch vom Leuchtkörper abgestrahlt wird.

Der Begriff "asymmetrisch" im Zusammenhang mit dem vom Leuchtkörper abgestrahlten Licht beziehungsweise der vom Leuchtkörper erzeugten Lichtverteilungskurve (LVK) kann sich darauf beziehen, dass Licht nicht in alle Richtungen in gleichem Umfang abgestrahlt wird. Wenn beispielsweise eine Fläche vom Leuchtkörper ausgeleuchtet wird, kann das abgestrahlte Licht einfach asymmetrisch sein, indem es die Fläche in einer Richtung stärker ausleuchtet als in andere Richtungen. Analog dazu kann das abgestrahlte Licht zweifach oder doppelt asymmetrisch sein, indem es die Fläche in zwei Richtungen stärker ausleuchtet als in andere Richtungen. Dabei können die zwei Richtungen im Wesentlichen rechtwinklig zueinander stehen. Wiederum analog dazu kann das abgestrahlte Licht dreifach asymmetrisch sein, indem es die Fläche in drei Richtungen stärker ausleuchtet als in andere Richtungen. Dabei können die drei Richtungen im Wesentlichen rechtwinklig zueinander stehen.

Die Auslenkstruktur der Lichtverteilungsplatte kann zudem unregelmässig über die Lichtverteilungsplatte verteilt sein. Eine solche unregelmässige Auslenkstruktur kann in mehrfacher Hinsicht für den Leuchtkörper vorteilhaft sein. Beispielsweise kann sie ermöglichen, das durch die unregelmässige Anordnung der Leuchtmittel eingespeiste Licht anwendungsspezifisch zu formen und dadurch eine präzise LVK zu erzeugen. Auch kann sie ermöglichen, dass ein Abschwächen der Lichtintensität des die Lichtverteilungsplatte durchdringenden Lichts ausgeglichen wird. Beispielsweise kann die Auslenkstruktur nahe den Leuchtmitteln, wo die Lichtintensität vergleichsweise hoch ist, verhältnismässig wenige Reflektorflächen beziehungsweise Refraktorflächen und ab der Leuchtmittel, wo die Lichtintensität vergleichsweise tief ist, verhältnismässig viele Reflektorflächen beziehungsweise Refraktorflächen aufweisen.

Erfindungsgemäss kann also mittels des Leuchtkörpers mit einfachen Mitteln erreicht werden, dass das Licht von der Lichtverteilungsplatte in einer, zwei oder drei von beispielsweise vier Richtungen stärker abgestrahlt wird als in den anderen Richtungen. Solche Leuchten mit asymmetrisch, doppelt asymmetrisch oder dreifach asymmetrisch abgestrahltem Licht können beispielsweise dazu vorgesehen sein, an einer Ecke oder einer Kante eines Tisches beziehungsweise mittig am Tisch aufgestellt zu werden und von dort aus die Tischoberfläche effizient auszuleuchten. Gleichzeitig kann verhindert werden, dass ein verhältnismässig grosser Anteil Licht neben der Tischoberfläche auftrifft, wo es nicht benötigt wird.

So kann mit dem Leuchtkörper eine für die Ausleuchtung eines Arbeitsplatzes angepasste LVK erzeugt werden. Insbesondere kann die LVK asymmetrisch beziehungsweise doppelt oder mehrfach asymmetrisch sein und somit von einer Seite des Arbeitsplatzes her eine effiziente Ausleuchtung des Arbeitsplatzes ermöglichen. Dadurch kann eine effiziente, gleichmässige und quasi vollständige Ausleuchtung des Arbeitsplatzes wie insbesondere eines Schreib- oder Arbeitstischs erreicht werden. Zudem können mit einem solchen Leuchtkörper normative Vorgaben, wie sie beispielsweise für Bürobeleuchtung bekannt sind, zielgerichtet und effizient eingehalten werden.

Der Leuchtkörper umfasst erfindungsgemäss ein zweites Leuchtmittel, wobei (i) das zweite Leuchtmittel einer an die erste Randfläche der Lichtverteilungsplatte angrenzenden zweiten der Randflächen der Lichtverteilungsplatte zugeordnet ist, sodass vom zweiten Leuchtmittel abgestrahltes Licht durch die zweite Randfläche in die Lichtverteilungsplatte einstrahlbar ist, (ii) das vom zweiten Leuchtmittel abgestrahlte und durch die zweite Randfläche in die Lichtverteilungsplatte eingestrahlte Licht durch die Auslenkstruktur der Lichtverteilungsplatte umleitbar ist, sodass es durch die Oberfläche oder die Unterfläche der Lichtverteilungsplatte abgestrahlt wird, (iii) die Auslenkstruktur der Lichtverteilungsplatte schräg zu einer zweiten Hauptabstrahlrichtung des zweiten Leuchtmittels ausgerichtet ist, und (iv) einer dritten der Randflächen der Lichtverteilungsplatte kein Leuchtmittel zugeordnet ist.

Indem erfindungsgemäss Licht über zwei Randflächen in die Lichtverteilungsplatte und über eine Randfläche kein Licht eingespeist wird, kann erreicht werden, dass die Lichtverteilungsplatte effizient verstärkt das Licht so umleitet, dass das Licht asymmetrisch, doppelt oder mehrfach asymmetrisch vom Leuchtkörper abgestrahlt wird. Insbesondere kann eine solche Ausgestaltung des Leuchtkörpers den Wirkungsgrad wesentlich erhöhen und ein verbesserte Ausleuchtung bereitstellen.

In einer ersten bevorzugten Ausführungsform des Leuchtkörpers ist einer vierten der Randflächen der Lichtverteilungsplatte kein Leuchtmittel zugeordnet. Eine solche Anordnung des Leuchtkörpers ermöglicht eine besonders effiziente Erzeugung einer doppelt asymmetrischen LVK beziehungsweise doppelt asymmetrischen Ausleuchtung. Dies kann beispielsweise dann zweckmässig sein, wenn eine Fläche von einer Ecke her beleuchtet werden soll oder wenn mehrere Leuchtkörper zur Beleuchtung kombiniert werden sollen. Bei Lichtverteilungsplatten mit vier Randflächen können so die Leuchtmittel beispielsweise L-förmig angeordnet sein und der Leuchtkörper kann als L-förmiger Leuchtkörper bezeichnet werden.

In einer zweiten bevorzugten Ausführungsform umfasst der Leuchtkörper ein drittes Leuchtmittel, das einer vierten der Randflächen der Lichtverteilungsplatte zugeordnet ist, sodass vom dritten Leuchtmittel abgestrahltes Licht durch die vierte Randfläche in die Lichtverteilungsplatte einstrahlbar ist, wobei das vom dritten Leuchtmittel abgestrahlte und durch die vierte Randfläche in die Lichtverteilungsplatte eingestrahlte Licht durch die Auslenkstruktur der Lichtverteilungsplatte umleitbar ist, sodass es durch die Oberfläche oder die Unterfläche der Lichtverteilungsplatte abgestrahlt wird, und die Auslenkstruktur der Lichtverteilungsplatte schräg zu einer dritten Hauptabstrahlrichtung des dritten Leuchtmittels ausgerichtet ist. Eine solche Anordnung des Leuchtkörpers ermöglicht eine besonders effiziente Erzeugung einer dreifach asymmetrischen LVK beziehungsweise dreifach asymmetrischen Ausleuchtung. Dies kann beispielsweise dann zweckmässig sein, wenn eine Fläche mittig von einer Seite beziehungsweise Kante her beleuchtet werden soll oder wenn mehrere Leuchtkörper zur Beleuchtung kombiniert werden sollen. Bei Lichtverteilungsplatten mit vier Randflächen können so die Leuchtmittel beispielsweise C-förmig angeordnet sein und der Leuchtkörper kann als C-förmiger Leuchtkörper bezeichnet werden.

Bevorzugt weisen die Oberfläche der Lichtverteilungsplatte und die Unterfläche der Lichtverteilungsplatte jeweils eine im Wesentlichen rechteckige Grundform auf. Der Begriff "rechteckig" in Bezug auf die Ober- und Unterflächen der Lichtverteilungsplatte kann neben im engeren Sinne rechteckigen Formen auch quadratisch Formen oder eine Form mit leicht gekrümmten Seitenlinien umfassen. Auch können die Winkel zwischen den Seitenlinien abgerundet sein und/oder von einem rechten Winkel abweichen. Bei einer solchen Ausgestaltung der Lichtverteilungsplatte können die Randflächen ebenfalls rechteckig ausgebildet sein. Dies ermöglicht eine verhältnismässig einfache effiziente Konstruktion der Lichtverteilungsplatte in einer für den Einbau in vielen Leuchten geeigneten Form.

Vorzugsweise umfassen die Randflächen vier, fünf oder sechs jeweils die Oberfläche mit der Unterfläche verbindende Randflächen. Lichtverteilungsplatten mit vier Randflächen können eine quaderförmige Ausgestaltung der Lichtverteilungsplatte ermöglichen. Leuchtkörper mit so geformten Lichtverteilungsplatten können in vielen Arten von Leuchten eingesetzt werden. Auch lassen sich mit solchen Lichtverteilungsplatten auf effiziente Weise LVK mit für die Ausleuchtung eines Arbeitsplatzes gewünschten asymmetrischen beziehungsweise doppelt oder mehrfach asymmetrischen LVK erzeugen.

Vorzugsweise ist die Auslenkstruktur der Lichtverteilungsplatte dazu ausgebildet, durch die Randflächen eingestrahltes Licht so umzuleiten, dass es sowohl durch die Oberfläche als auch durch die Unterfläche der Lichtverteilungsplatte abstrahlbar ist.

Alternativ dazu umfasst der Leuchtkörper vorzugsweise ein weiteres erstes Leuchtmittel und eine weitere Lichtverteilungsplatte, wobei (i) die weitere Lichtverteilungsplatte eine weitere Oberfläche, eine der weiteren Oberfläche entsprechende weitere Unterfläche und die weitere Oberfläche mit der weiteren Unterfläche verbindende weitere Randflächen aufweist, (ii) die Unterfläche der Lichtverteilungsplatte benachbart zur weiteren Oberfläche der weiteren Lichtverteilungsplatte angeordnet ist, (iii) das weitere erste Leuchtmittel einer ersten der weiteren Randflächen der weiteren Lichtverteilungsplatte zugeordnet ist, sodass vom weiteren ersten Leuchtmittel abgestrahltes Licht durch die weitere erste Randfläche in die weitere Lichtverteilungsplatte einstrahlbar ist, (iv) die Auslenkstruktur der Lichtverteilungsplatte dazu ausgebildet ist, das vom ersten Leuchtmittel abgestrahlte und durch die erste Randfläche in die Lichtverteilungsplatte eingestrahlte Licht so umzuleiten, sodass es durch die Oberfläche der Lichtverteilungsplatte abgestrahlt wird,

(v) die weitere Lichtverteilungsplatte eine weitere Auslenkstruktur umfasst, mit der das vom weiteren ersten Leuchtmittel abgestrahlte und durch die weitere erste Randfläche in die weitere Lichtverteilungsplatte eingestrahlte Licht umleitbar ist, sodass es durch die weitere Unterfläche der Lichtverteilungsplatte abgestrahlt wird, und (vi) die weitere Auslenkstruktur der weiteren Lichtverteilungsplatte schräg zu einer ersten Hauptabstrahlrichtung des weiteren ersten Leuchtmittels ausgerichtet ist.

Indem der Leuchtkörper dazu ausgebildet ist, Licht auf analoge Art und Weise nach oben und nach unten abzustrahlen, kann zusätzlich zum meistens nach unten abgestrahlten Direktlicht auch das meistens nach oben abgestrahlte Indirektlicht asymmetrisch abgegeben werden. Dies ermöglicht es, dass eine den Leuchtkörper umfassende Leuchte sich entsprechendes Direkt- und Indirektlicht erzeugt, was die Ausleuchtung eines Arbeitsplatzes weiter verbessern kann. Auch ist es möglich, das Indirektlicht anders zu formen als das Direktlicht und damit eine gewünschte Ausleuchtung des Arbeitsplatzes zu erreichen.

Das erste Leuchtmittel und das zweite Leuchtmittel und gegebenenfalls das dritte Leuchtmittel sind jeweils längsförmig ausgebildet. Der Begriff "längsförmig" kann sich im Zusammenhang mit den Leuchtmitteln auf eine lineare, quasi lineare oder auch gekrümmte Form beziehen. Die Längenausdehnung ist dabei in jedem Fall grösser als die Ausdehnung in der Breite. Dabei können die Leuchtmittel oder andere benannte Teile des Leuchtköpers in einem Querschnitt entlang einer Längsrichtung im Wesentlichen gerade ausgestaltet sein. Insbesondere kann sich der Begriff auf eine Bauform der Leuchtmittel beziehen, die es ermöglicht, längsförmig Licht abzugeben. Dabei kann die Längsförmigkeit des Leuchtmittels auch mittels einer passenden Linse beziehungsweise Linsengruppe oder einer analogen Optik erzeugt werden, indem das Licht längsförmige geformt wird. Solche längsförmigen Leuchtmittel ermöglichen ein gleichmässiges und effizientes Einspeisen über die Randflächen in die Lichtverteilungsplatte.

Das erste Leuchtmittel erstreckt sich entlang der ersten Randfläche der Lichtverteilungsplatte und das zweite Leuchtmittel entlang der zweiten Randfläche der Lichtverteilungsplatte und gegebenenfalls das dritte Leuchtmittel entlang der vierten Randfläche der Lichtverteilungsplatte. Der Begriff "entlang", wie er hier verwendet wird, kann sich auf ein Erstrecken über die volle oder im Wesentlichen volle Länge beziehen. Dabei kann ein Teil entlang eines anderen Teils verlaufen, indem es sich parallel dazu erstreckt, sequenziell neben diesem angeordnet ist oder nebenher verläuft. Zumindest über weite Strecken verläuft das eine Teil jedoch nicht auf dem oder im anderen Teil sondern ist von diesem getrennt. Insbesondere kann sich dieser Begriff im Zusammenhang mit den ersten und zweiten Leuchtmitteln und den Randflächen darauf beziehen, dass die Leuchtmittel der Länge der zugehörigen Randflächen nach verlaufen. Dabei können sie sich quasi über die ganze Länge der Randflächen erstrecken. Eine solche Ausgestaltung der Leuchtmittel ermöglichte eine effiziente und gleichmässige Einstrahlung von Licht in die Lichtverteilungsplatte.

Das erste Leuchtmittel und gegebenenfalls das zweite Leuchtmittel und gegebenenfalls das dritte Leuchtmittel können jeweils eine LED-Leiste aufweisen. Der Begriff "LED-Leiste" kann sich in diesem Zusammenhang auf eine oder eine Serie mehrerer längsförmiger Platinen beziehen, die mit Leuchtdioden bestückt sind, oder eine Serie mehrerer Platinen mit Leuchtdioden. LED-Leisten ermöglichen einen anwendungsspezifischen energieeffizienten Betrieb der Leuchte. Auch können die Abstrahlungseigenschaften der Leuchtmittel mit solchen LED-Leisten spezifisch eingestellt beziehungsweise vorgegeben werden.

Der Begriff "Platine" kann sich in diesem Zusammenhang auf eine Leiterplatte (Printed Circuit Board, PCB) beziehen, die ein Träger für elektronische Bauteile ist. Im allgemeinen dienen Platinen der mechanischen Befestigung und elektrischen Verbindung elektronischer Bauteile. Üblicherweise bestehen Leiterplatten beziehungsweise Platinen aus einem elektrisch isolierendem Material mit daran haftenden, leitenden Verbindungen (Leiterbahnen). Als isolierendes Material ist faserverstärkter Kunststoff gängig. Die Leiterbahnen werden zumeist aus einer dünnen Schicht Kupfer geätzt. Die Bauelemente werden auf Lötflächen (Pads) oder in Lötaugen gelötet. Grössere Komponenten können auch mit Kabelbindern, Klebstoff oder Verschraubungen auf der Platine befestigt werden.

Der Begriff "Leuchtdiode" kann synonym für lichtemittierende Diode oder Light Emitting Diode (LED) verstanden werden. Die Leuchtdioden können in einer Aufsicht beispielsweise rund, elliptisch, quadratisch oder rechteckig ausgestaltet sein. Sie können auf der Platine befestigt sein, die zusätzlich mit einer Steuerungselektronik zum Betreiben der Leuchtdioden ausgestattet sein kann.

Vorzugsweise umfasst die Auslenkstruktur der Lichtverteilungsplatte Reflektorflächen und/oder Refraktorflächen. Mit solchen Reflektorflächen in der Auslenkstruktur kann das seitlich eingespeiste Licht effizient umgeleitet werden und es kann flexibel eine gewünschte LVK erzeugt werden. Die Reflektor- beziehungsweise Refraktorflächen können beispielsweise an Prismen der Auslenkstruktur ausgebildet sein. Sie können plan geformt oder als Freiformflächen beliebig geformt sein. Vorteilhafterweise ermöglicht die Auslenkstruktur so eine Totalreflexion beziehungsweise Quasitotalreflexion des Lichts.

Vorzugsweise umfasst der Leuchtkörper eine Entblendungsplatte, die parallel beziehungsweise planparallel zur Oberfläche oder Unterfläche der Lichtverteilungsplatte angeordnet ist, wobei zwischen Lichtverteilungsplatte und Entblendungsplatte ein Luftspalt angeordnet ist. Eine solche Entblendungsplatte kann dazu dienen, das von der Lichtverteilungsplatte abgestrahlte Licht in seiner Verteilung zu formen und insbesondere zu entblenden. Der Luftspalt dient dabei als Grenzschicht zwischen der Lichtverteilungsplatte und der Entblendungsplatte, was ermöglicht, dass die beiden Platten unterschiedliche Eigenschaften haben und diese effizient umsetzen können.

Vorzugsweise umfasst der Leuchtkörper eine Klarplatte, die parallel beziehungsweise planparallel zur Oberfläche oder Unterfläche der Lichtverteilungsplatte angeordnet ist, wobei zwischen Klarplatte und Entblendungsplatte ein Luftspalt angeordnet ist. Dabei ist die Entblendungsplatte vorzugsweise zwischen der Lichtverteilungsplatte und der Klarplatte angeordnet, wobei einer der Luftspalte zwischen Lichtverteilungsplatte und Entblendungsplatte und einer der Luftspalte zwischen der Entblendungsplatte und der Klarplatte liegt. Eine solche Klarplatte kann aus ästhetischen Gründen oder zur weiteren Entblendung eingesetzt werden. Beispielsweise kann sie Licht, das in verhältnismässig flachen Winkeln auftritt reflektieren und so am Austritt aus dem Leuchtkörper hindern.

Die Erfindung betrifft eine Stehleuchtenanordnung mit einem auf einem Boden aufstellbaren Tragständer, einem Adapterteil und mindestens einem Leuchtkörper der oben beschriebenen Art, wobei das Adapterteil dazu ausgestaltet ist, den mindestens einen Leuchtkörper am Tragständer zu befestigen. Eine solche Stehleuchtenanordnung ermöglicht einen flexiblen Einsatz in unterschiedlichen Situationen. Dazu kann sie über das Adapterteil bedarfsgerecht mit einer oder mehreren Leuchten bestückt werden, die für einen bestimmten Einsatz vorgesehen beziehungsweise geeignet sind. Beispielsweise kann sie für zwei benachbarte Arbeitsplätze mit zwei Leuchten bestückt sein, die jeweils linkseitig beziehungsweise rechtsseitig doppelt asymmetrisch Licht abstrahlen.

Die erfindungsgemässe Stehleuchtenanordnung ermöglicht es, eine hohe Modularität zu erreichen, sodass sie zu vielen unterschiedlichen Einsatzzwecken effizient verwendet werden kann. Beispielsweise kann mit der Bereitstellung einer Stehleuchtenanordnung mit L-förmigen Leuchtkörpern, gespiegelt L-förmigen Leuchtkörpern und/oder C-förmigen Leuchtkörpern eine Vielzahl von Verwendungen ermöglicht werden. Insbesondere ermöglicht die Verwendung solcher drei Grunddesigns von Leuchtkörpern eine anwendungsspezifisch angepasste Ausleuchtung. Dabei können mehrere asymmetrische Leuchtkörper in einer Stehleuchtenanordnung so kombiniert werden, dass eine bestimmungsgemässe Ausleuchtung erreicht wird, die dann auch wieder symmetrisch sein kann. Beispielsweise können zwei gegensätzlich ausgerichtete C-förmige Leuchtkörper kombiniert werden, die zusammen eine symmetrische Beleuchtung ergeben. Oder es können zwei L-förmige und zwei gespiegelt L-förmige Leuchtkörper miteinander in einer Stehleuchtenanordnung kombiniert werden, die wiederum zusammen wieder eine symmetrische Beleuchtung ergeben.

### Kurze Beschreibung der Zeichnungen

Weitere vorteilhafte Ausgestaltungen der Erfindung ergeben sich aus der nachfolgenden Beschreibung von Ausführungsbeispielen der Erfindung mithilfe der schematischen Zeichnung. Insbesondere werden im Folgenden der Leuchtkörper und die erfindungsgemässe Stehleuchtenanordnung unter Bezugnahme auf die beigefügten Zeichnungen anhand von Ausführungsbeispielen detaillierter beschrieben. Es zeigen:
- Fig. 1: eine perspektivische Ansicht eines ersten Ausführungsbeispiels eines Leuchtköpers;
- Fig. 2: eine Ansicht von oben auf den Leuchtkörper von Fig. 1;
- Fig. 3: eine Ansicht von der Seite an den Leuchtkörper von Fig. 1;
- Fig. 4: eine mögliche Lichtverteilungskurve wie sie vom Leuchtkörper von Fig. 1 erzeugt wird;
- Fig. 5: eine Ansicht von oben auf den Leuchtkörper von Fig. 1 bei bestimmungsgemässer Positionierung an einem Schreibtisch;
- Fig. 6: eine perspektivische Ansicht eines zweiten Ausführungsbeispiels eines Leuchtkörpers;
- Fig. 7: eine Ansicht von unten an den Leuchtkörper von Fig. 6;
- Fig. 8: eine Ansicht von der Seite an den Leuchtkörper von Fig. 6;
- Fig. 9: eine perspektivische Ansicht eines dritten Ausführungsbeispiels eines Leuchtkörpers;
- Fig. 10: eine Ansicht von unten an den Leuchtkörper von Fig. 9;
- Fig. 11: eine Querschnittsansicht entlang der Linie A-A von Fig. 10;
- Fig. 12: eine mögliche Lichtverteilungskurve wie sie vom Leuchtkörper von Fig. 9 erzeugt wird;
- Fig. 13: eine Ansicht von oben auf ein erstes Ausführungsbeispiel einer erfindungsgemässen Stehleuchtenanordnung mit dem Leuchtkörper von Fig. 1 und dem Leuchtkörper von Fig. 9.

### Weg(e) zur Ausführung der Erfindung

Bestimmte Ausdrücke werden in der folgenden Beschreibung aus praktischen Gründen verwendet und sind nicht einschränkend zu verstehen. Die Wörter "rechts", "links", "unten" und "oben" bezeichnen Richtungen in der Zeichnung, auf die Bezug genommen wird. Die Ausdrücke "nach innen", "nach aussen" "unterhalb", "oberhalb", "links", "rechts" oder ähnliche werden zur Beschreibung der Anordnung bezeichneter Teile zueinander, der Bewegung bezeichneter Teile zueinander und der Richtungen hin zum oder weg vom geometrischen Mittelpunkt der Erfindung sowie benannter Teile derselben wie in den Fig. dargestellt verwendet. Diese räumlichen Relativangaben umfassen auch andere Positionen und Ausrichtungen als die in den Fig. dargestellten. Zum Beispiel wenn ein in den Fig. dargestelltes Teil umgedreht wird, sind Elemente oder Merkmale, die als "unterhalb" beschrieben sind, dann "oberhalb". Die Terminologie umfasst die oben ausdrücklich erwähnten Wörter, Ableitungen von denselben und Wörter ähnlicher Bedeutung.

Um Wiederholungen in den Fig. und der zugehörigen Beschreibung der verschiedenen Aspekte und Ausführungsbeispielen zu vermeiden, sollen bestimmte Merkmale als gemeinsam für verschieden Aspekte und Ausführungsbeispiele verstanden werden. Das Weglassen eines Aspekts in der Beschreibung oder einer Fig. lässt nicht darauf schliessen, dass dieser Aspekt in dem zugehörigen Ausführungsbeispiel fehlt. Vielmehr kann ein solches Weglassen der Klarheit und dem Verhindern von Wiederholungen dienen. In diesem Zusammenhang gilt für die gesamte weitere Beschreibung folgende Festlegung: Sind in einer Figur zum Zweck zeichnerischer Eindeutigkeit Bezugszeichen enthalten, aber im unmittelbar zugehörigen Beschreibungstext nicht erwähnt, so wird auf deren Erläuterung in vorangehenden Figurenbeschreibungen Bezug genommen. Sind ausserdem im unmittelbar zu einer Figur gehörigen Beschreibungstext Bezugszeichen erwähnt, die in der zugehörigen Figur nicht enthalten sind, so wird auf die vorangehenden und nachstehenden Figuren verwiesen. Ähnliche Bezugszeichen in zwei oder mehreren Fig. stehen für ähnliche oder gleiche Elemente.

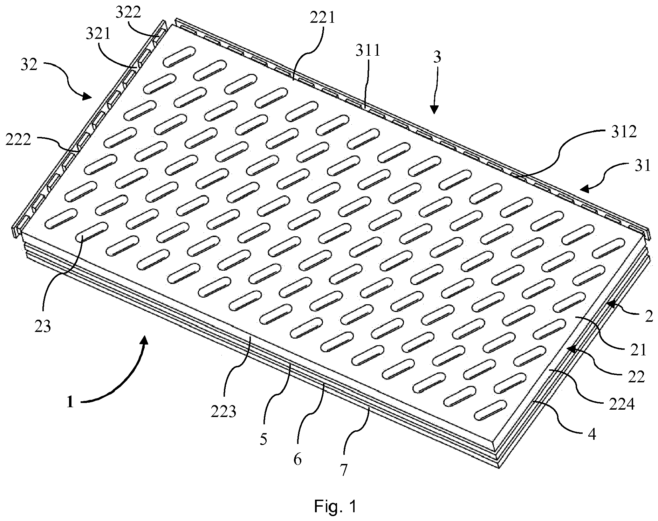

Fig. 1 zeigt ausgewählte Bauteile eines ersten Ausführungsbeispiels eines Leuchtkörpers 1. Der Leuchtkörper 1 umfasst eine Lichtverteilungsplatte 2 und zwei Leuchtmittel 3 nämlich ein erstes LED-Leuchtmittel 31 und ein zweites LED-Leuchtmittel 32. Die Lichtverteilungsplatte 2 ist quaderförmig mit einer Oberfläche 21, einer der Oberfläche 21 entsprechenden Unterfläche 24 (in Fig. 1 nicht ersichtlich) und vier die Oberfläche 21 mit der Unterfläche 24 verbindende Randflächen 22 ausgebildet.

Die Oberfläche 21, die Unterfläche 24 und die Randflächen 22 haben jeweils eine rechteckige Grundform, wobei die Rechtecke der Randflächen 22 eine im Verhältnis zu ihrer Länge kurze Breite aufweisen. Die Rechtecke schliessen alle in einem rechten Winkel an ihre jeweils benachbarten Rechtecke an. Die Randflächen 22 bestehen aus einer ersten Randfläche 221 und einer dritten Randfläche 223, die sich jeweils zwischen zwei Längsseiten der Oberfläche 21 und der Unterfläche 24 erstrecken, sowie einer zweiten Randfläche 222 und einer vierten Randfläche 224, die sich jeweils zwischen zwei Breitseiten der Oberfläche 21 und der Unterfläche 24 erstrecken.

Entlang der ersten Randfläche 221 ist das erste LED-Leuchtmittel 31 angeordnet. Es umfasst eine längsförmige Platine 311, die mit einer Serie von zwanzig in einer geraden Linie aufgereihten Leuchtdioden 312 bestückt ist. Die Leuchtdioden 312 des ersten LED-Leuchtmittels 31 sind zu der ersten Randfläche 221 hin ausgerichtet, sodass von ihnen abgestrahltes Licht entlang einer ersten Hauptabstrahlrichtung 313 des ersten LED-Leuchtmittels 31 auf die erste Randfläche 221 trifft und durch diese hindurch in das Innere der Lichtverteilungsplatte 2 dringt. Die erste Hauptabstrahlrichtung 313 des ersten LED-Leuchtmittels 31 ist rechtwinklig zu seiner Platine 311 und rechtwinklig zur ersten Randfläche 221.

Entlang der zweiten Randfläche 222 ist das zweite LED-Leuchtmittel 32 angeordnet. Es umfasst ebenfalls eine längsförmige Platine 321, die mit einer Serie von zehn in einer geraden Linie aufgereihten Leuchtdioden 322 bestückt ist. Die Leuchtdioden 322 des zweiten LED-Leuchtmittels 32 sind zu der zweiten Randfläche 222 hin ausgerichtet, sodass von ihnen abgestrahltes Licht entlang einer zweiten Hauptabstrahlrichtung 323 des zweiten LED-Leuchtmittels 32 auf die zweite Randfläche 222 trifft und durch sie hindurch in das Innere der Lichtverteilungsplatte 2 dringt. Die zweite Hauptabstrahlrichtung 323 des zweiten LED-Leuchtmittels 31 ist rechtwinklig zu seiner Platine 321 und rechtwinklig zur zweiten Randfläche 222.

Die Leuchtdioden 312/322 weisen alle eine rechteckige Grundform auf.

Der dritten Randfläche 223 und der vierten Randfläche 224 der Lichtverteilungsplatte 2 sind keine Leuchtmittel zugeordnet, sodass im Wesentlichen kein Licht durch sie hindurch in das Innere der Lichtverteilungsplatte 2 dringt. Der Leuchtkörper 1 ist so als L-förmiger Leuchtkörper 1 ausgebildet.

Weiter weist die Lichtverteilungsplatte 2 eine Auslenkstruktur 23 auf, die sieben Reihen mit jeweils fünfzehn Auslenkelementen umfasst. Die Auslenkelemente der Auslenkstruktur 23 weisen Refraktorflächen auf, die schräg beziehungsweise quasi diagonal zur ersten Hauptabstrahlrichtung 313 und zur zweiten Hauptabstrahlrichtung 323 angeordnet sind. Die Auslenkstruktur 23 ist dadurch sowohl zur ersten Hauptabstrahlrichtung 313 des ersten LED-Leuchtmittels 31 als auch zur zweiten Hauptabstrahlrichtung 323 des zweiten LED-Leuchtmittels 32 schräg ausgerichtet.

Der Leuchtkörper 1 umfasst weiter eine Entblendungsplatte 5 und eine Klarplatte 7. Die Entblendungsplatte 5 und die Klarplatte 7 sind jeweils planplanar zur Lichtverteilungsplatte 2 ausgerichtet. Zwischen der Entblendungsplatte 5 und der Lichtverteilungsplatte 2 ist ein erster Luftspalt 4 angeordnet und zwischen der Entblendungsplatte 5 und der Klarplatte 7 ein zweiter Luftspalt 6 angeordnet.

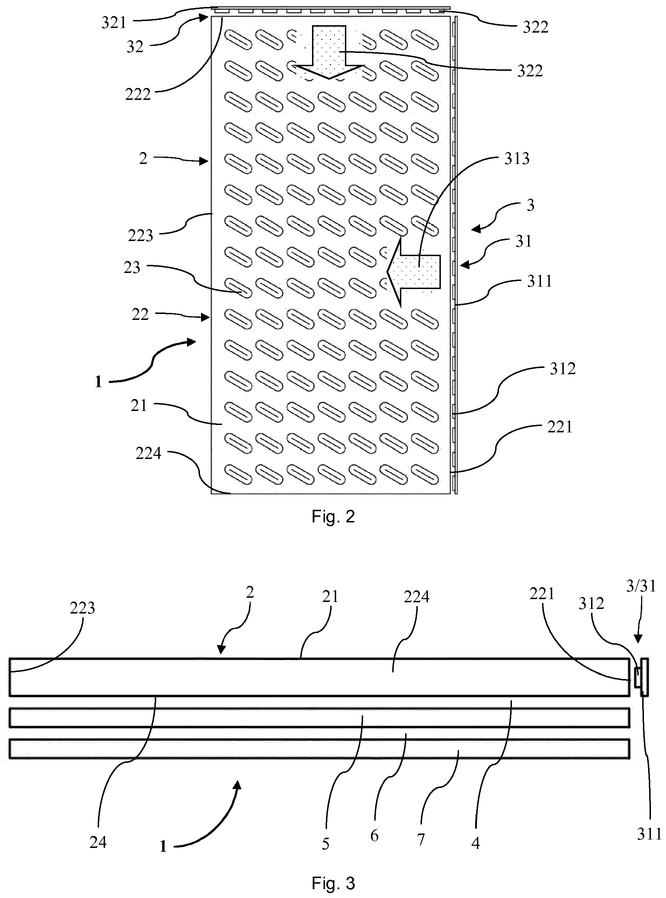

In Fig. 2 sind die ausgewählten Bauteile des Leuchtkörpers 1 von oben dargestellt. Dabei ist ersichtlich, dass das erste LED-Leuchtmittel 31 an die erste Randfläche 221 der Lichtverteilungsplatte 2 angrenzend angeordnet ist und das zweite LED-Leuchtmittel 32 an die zweite Randfläche 222. Zudem ist ersichtlich, dass die Auslenkelemente 23 jeweils quasi diagonal ausgerichtet sind.

Fig. 3 zeigt die ausgewählten Bauteile des Leuchtkörpers 1 von vorne beziehungsweise an eine kürzere Seite oder Querseite der Lichtverteilungsplatte 2. Die Lichtverteilungsplatte 2 ist dicker als die Entblendungsplatte 5 und die Klarplatte 7. Ansonsten sind die drei Platten gleich dimensioniert. Die Unterfläche 24 der Lichtverteilungsplatte 2 ist identisch wie die Oberfläche 21 ausgebildet. Im Leuchtkörper 1 sind die dargestellten Bauteile zusammen mit anderen nicht dargestellten Bauteilen wie Betriebsgeräten oder Halterungen in einem Gehäuse angeordnet.

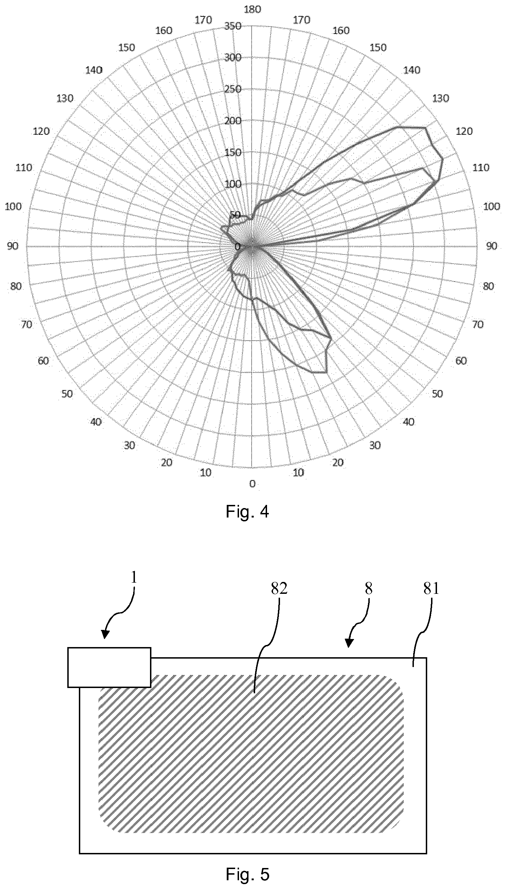

Im Betrieb des Leuchtkörpers 1 strahlt das erste LED-Leuchtmittel 31 Licht durch die erste Randfläche 221 horizontal in den Innenraum der Lichtverteilungsplatte 2. Gleichzeitig strahlt das zweite LED-Leuchtmittel 32 Licht durch die zweite Randfläche 222 horizontal in den Innenraum der Lichtverteilungsplatte 2. Indem die einzelnen Umlenkelemente der Auslenkstruktur 23 diagonal zur Haupteinstrahlrichtung des ersten LED-Leuchtmittels 31 und zur Haupteinstrahlrichtung des zweiten LED-Leuchtmittels 32 ausgerichtet sind, lenken sie im Wesentlichen das gesamte in die Lichtverteilungsplatte 2 eindringende Licht um. Wie in der in Fig. 4 dargestellten Lichtverteilungskurve (LVK) ersichtlich ist, wird dabei ein Anteil des gesamten Lichts als Indirektlicht nach oben und ein Anteil des gesamten Lichts als Direktlicht nach unten doppelt asymmetrisch abgestrahlt. Dabei durchdringt das nach unten ausgelenkte Licht die Entblendungsplatte 5 und die Klarplatte 7 bevor es aus dem Leuchtkörper 1 austritt. Durch die Entblendungsplatte 5 wird das Licht geformt, sodass ein Blendeffekt des Leuchtkörpers 1 reduziert werden kann.

Durch die asymmetrische Einstrahlung des Lichts beziehungsweise Einstrahlung des Lichts über Eck in die Lichtverteilungsplatte 2 mittels des ersten LED-Leuchtmittels 31 und des zweiten LED-Leuchtmittels 32 sowie durch die Ausgestaltung der Umlenkelemente der Auslenkstruktur 23 wird durch der Leuchtkörper 1 eine doppelt asymmetrische LVK erzeugt. Insbesondere wird eine nach rechts und nach vorne verschobene Ausleuchtung mit dem Leuchtkörper 1 erreicht.

In der Fig. 5 ist der Leuchtkörper 1 in einer möglichen bestimmungsgemässen Aufstellung an einem Schreibtisch 8 gezeigt. Der Leuchtkörper 1 ist an der linken hinteren Ecke des Schreibtischs 8 und oberhalb des Schreibtischs 8 aufgestellt. Durch die doppelt asymmetrische LVK leuchtet das vom Leuchtkörper 1 abgegebene Direktlicht einen Bereich 82 aus, der quasi die ganze Arbeitsoberfläche 81 des Schreibtischs 8 abdeckt.

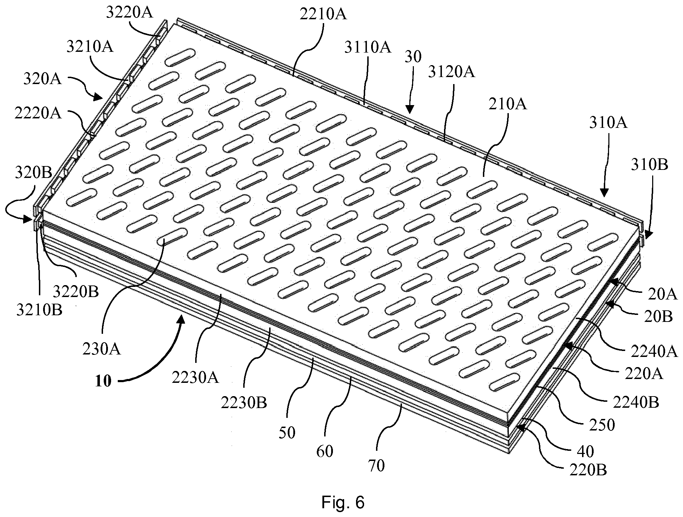

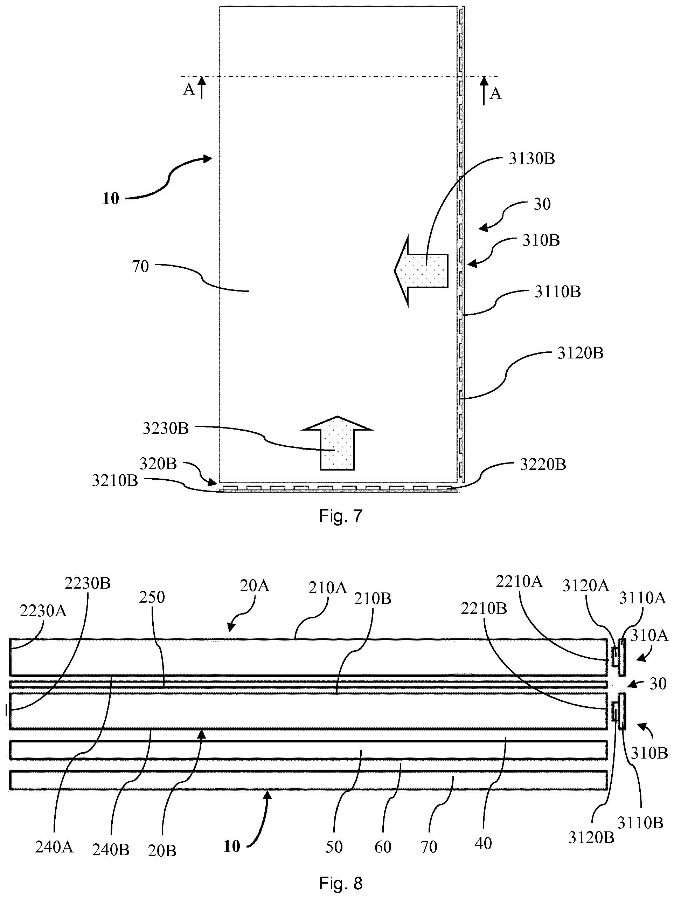

Fig. 6, Fig. 7 und Fig. 8 zeigen ausgewählte Bauteile eines zweiten Ausführungsbeispiels eines Leuchtkörpers 10. Entsprechend des oben beschriebenen ersten Leuchtkörpers 1 weist auch der zweite Leuchtkörper 10 eine Entblendungsplatte 50 und eine unterhalb davon angeordnete und durch einen zweiten Luftspalt 60 von ihr getrennte Klarplatte 70 auf.

Im Unterschied zum oben beschriebenen Leuchtkörper 1 umfasst der Leuchtkörper 10 jedoch zwei planparallel angeordnete Lichtverteilungsplatten 20A/20B. Die obere Lichtverteilungsplatte 20A ist quaderförmig mit einer rechteckigen Oberfläche 210A, einer der Oberfläche 210A entsprechenden Unterfläche 240A und vier die Oberfläche 210A mit der Unterfläche 240A verbindende Randflächen 220A ausgebildet, wobei die Oberfläche 210A, die Unterfläche 240A und die Randflächen 220A jeweils eine rechteckige Grundform haben. Die Randflächen 220A bestehen aus einer ersten Randfläche 2210A und einer dritten Randfläche 2230A, die sich jeweils zwischen zwei Längsseiten der Oberfläche 210A und der Unterfläche 240A erstrecken, sowie einer zweiten Randfläche 2220A und einer vierten Randfläche 2240A, die sich jeweils zwischen zwei Breitseiten der Oberfläche 210A und der Unterfläche 240A erstrecken.

Die untere Lichtverteilungsplatte 20B ist identisch zur oberen Lichtverteilungsplatte 20A mit analogen eine erste Randfläche 2210B, eine zweite Randfläche 2220B, eine dritte Randfläche 2230B und eine vierte Randfläche 2240B enthaltenden Randflächen 220B sowie einer Oberfläche 210B und einer Unterfläche 240B ausgebildet.

Der Leuchtkörper 10 umfasst vier Leuchtmittel 30. Entlang der ersten Randfläche 2210A der oberen Lichtverteilungsplatte 20A ist ein oberes erstes LED-Leuchtmittel 310A und entlang der der ersten Randfläche 2210B der unteren Lichtverteilungsplatte 20A ein identisches unteres erstes LED-Leuchtmittel 310B angeordnet. Das obere erste LED-Leuchtmittel 310A und das untere erste Leuchtmittel 310B umfassen jeweils eine längsförmige Platine 3110A/3110B, die jeweils mit einer Serie von Leuchtdioden 3120A/3120B bestückt sind. Die Leuchtdioden 3120A des oberen ersten LED-Leuchtmittels 310A sind zur ersten Randfläche 2210A der oberen Lichtverteilungsplatte 20A hin ausgerichtet, sodass von ihnen abgestrahltes Licht auf die obere erste Randfläche 2210A trifft und durch sie hindurch in das Innere der oberen Lichtverteilungsplatte 20A dringt. Die Leuchtdioden 3120B des unteren ersten LED-Leuchtmittels 310B sind zur zweiten Randfläche 2210B der unteren Lichtverteilungsplatte 20B hin ausgerichtet, sodass von ihnen abgestrahltes Licht auf die untere erste Randfläche 2210B trifft und durch sie hindurch in das Innere der unteren Lichtverteilungsplatte 20B dringt.

Entlang der zweiten Randfläche 2220A der oberen Lichtverteilungsplatte 20A ist ein oberes zweites LED-Leuchtmittel 320A angeordnet und entlang der zweiten Randfläche 2220B der unteren Lichtverteilungsplatte 20B ein unteres zweites LED-Leuchtmittel 320B. Das obere und das untere zweite LED-Leuchtmittel 320A/320B umfassen jeweils ebenfalls eine längsförmige Platine 3210A/3210B, die mit einer Serie von Leuchtdioden 3220A/3220B bestückt ist. Die Leuchtdioden 3220A des oberen zweiten LED-Leuchtmittels 320A sind zu der zweiten Randfläche 2220A der oberen Lichtverteilungsplatte 20A hin ausgerichtet, sodass von ihnen abgestrahltes Licht auf die obere zweite Randfläche 2220A trifft und durch sie hindurch in das Innere der oberen Lichtverteilungsplatte 20A dringt. Die Leuchtdioden 3220B des unteren zweiten LED-Leuchtmittels 320B sind zu der zweiten Randfläche 2220B der unteren Lichtverteilungsplatte 20B hin ausgerichtet, sodass von ihnen abgestrahltes Licht auf die untere zweite Randfläche 2220B trifft und durch sie hindurch in das Innere der unteren Lichtverteilungsplatte 20B dringt.

Zwischen der oberen Lichtverteilungsplatte 20A und der unteren Lichtverteilungsplatte 20B ist eine Lichtreflexionsschicht 250 angeordnet, die einen Übergang von Licht zwischen der oberen Lichtverteilungsplatte 20A und der unteren Lichtverteilungsplatte 20B verhindert. Die obere Lichtverteilungsplatte 20A ist mit einer Auslenkstruktur 230A ausgestattet und die untere Lichtverteilungsplatte 20B ebenfalls (in den Fig. nicht ersichtlich).

Die Auslenkstruktur 230 der oberen Lichtverteilungsplatte 20A und diejenige der unteren Lichtverteilungsplatte 20B weisen jeweils Umlenkelemente mit einer Refraktorfläche auf, die schräg beziehungsweise quasi diagonal zu einer ersten Hauptabstrahlrichtung des oberen ersten Leuchtmittels 310A und einer zweiten Hauptabstrahlrichtung des oberen zweiten Leuchtmittels 320A beziehungsweise einer ersten Hauptabstrahlrichtung 3130B des unteren ersten Leuchtmittels 310B und einer zweiten Hauptabstrahlrichtung 3230B des unteren zweiten Leuchtmittels 320B angeordnet sind. Die oberen und unteren ersten Hauptabstrahlrichtungen 3130B der oberen und unteren ersten LED-Leuchtmittel 310A/310B sind jeweils rechtwinklig zu ihren Platinen 3110A/310B und rechtwinklig zu den oberen und unteren ersten Randflächen 2210A/2210B. Die oberen und unteren zweiten Hauptabstrahlrichtungen 3230B der oberen und unteren zweiten LED-Leuchtmittel 320A/320B sind jeweils rechtwinklig zu ihren Platinen 3210A/320B und rechtwinklig zu den oberen und unteren zweiten Randflächen 2220A/2220B. Die ersten Auslenkstrukturen 230A der oberen Lichtverteilungsplatte 20A sind dadurch sowohl zur ersten Hauptabstrahlrichtung des oberen ersten LED-Leuchtmittels 310A als auch zur zweiten Hauptabstrahlrichtung des oberen zweiten LED-Leuchtmittels 320A schräg ausgerichtet. Ähnlich sind die ersten Auslenkstrukturen der unteren Lichtverteilungsplatte 20B sowohl zur ersten Hauptabstrahlrichtung 3130B des unteren ersten LED-Leuchtmittels 310B als auch zur zweiten Hauptabstrahlrichtung 3230B des unteren zweiten LED-Leuchtmittels 320B schräg ausgerichtet.

Im Betrieb des Leuchtkörpers 10 strahlt das obere erste LED-Leuchtmittel 310A Licht durch die erste Randfläche 2210A der horizontal in den Innenraum der oberen Lichtverteilungsplatte 20A. Gleichzeitig strahlt das obere zweite LED-Leuchtmittel 320A Licht durch die zweite Randfläche 2220A horizontal in den Innenraum der oberen Lichtverteilungsplatte 20A. Indem die einzelnen Umlenkelemente der Auslenkstruktur 230A der oberen Lichtverteilungsplatte 20A quasi diagonal zur Haupteinstrahlrichtung des oberen ersten LED-Leuchtmittels 310A und zur Haupteinstrahlrichtung des oberen zweiten LED-Leuchtmittels 320A ausgerichtet sind, lenken sie im Wesentlichen das gesamte in die obere Lichtverteilungsplatte 20A eindringende Licht um. Dabei wird von der oberen Lichtverteilungsplatte 20A Licht ausschliesslich nach oben umgeleitet und als Indirektlicht aus dem Leuchtkörper 10 abgegeben.

Ähnlich dazu strahlt das untere erste LED-Leuchtmittel 310B Licht durch die erste Randfläche 2210B horizontal in den Innenraum der unteren Lichtverteilungsplatte 20B. Gleichzeitig strahlt das untere zweite LED-Leuchtmittel 320B Licht durch die zweite Randfläche 2220B horizontal in den Innenraum der unteren Lichtverteilungsplatte 20B. Indem die einzelnen Umlenkelemente der Auslenkstruktur der unteren Lichtverteilungsplatte 20B ebenfalls quasi diagonal zur ersten Haupteinstrahlrichtung 3130B des unteren ersten LED-Leuchtmittels 310B und zur zweiten Haupteinstrahlrichtung 3230B des unteren zweiten LED-Leuchtmittels 320B ausgerichtet sind, lenken sie das im Wesentlichen gesamte in die untere Lichtverteilungsplatte 20B eindringende Licht um. Dabei wird von der unteren Lichtverteilungsplatte 20B Licht ausschliesslich nach unten umgeleitet und via die Entblendungsplatte 50 und die Klarplatte 70 als Indirektlicht aus dem Leuchtkörper 10 abgegeben.

Auf die vorstehend beschrieben Weise kann im Leuchtkörper 10 die Direktlichterzeugung konstruktiv von der Indirektlichterzeugung abgekoppelt werden. Dies ermöglicht einerseits, dass die Auslenkstrukturen 230A der Lichtverteilungsplatten 20A/20B verhältnismässig einfach gestaltet werden können. Andererseits ermöglicht eine solche Ausgestaltung, dass das Direktlicht völlig unabhängig vom Indirektlicht gestaltet werden kann.

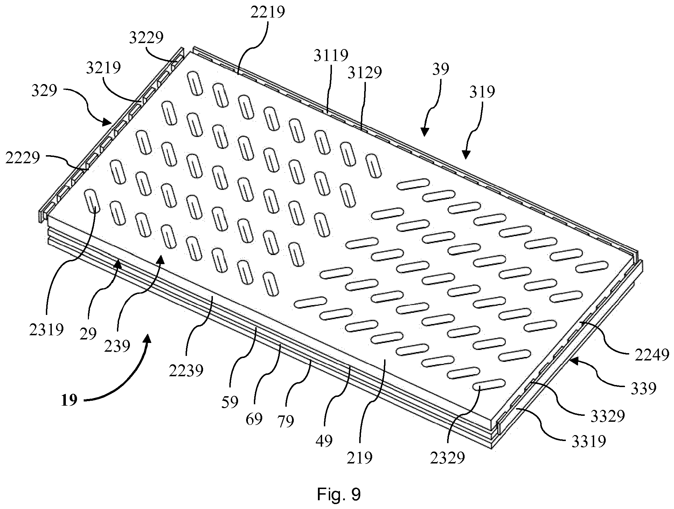

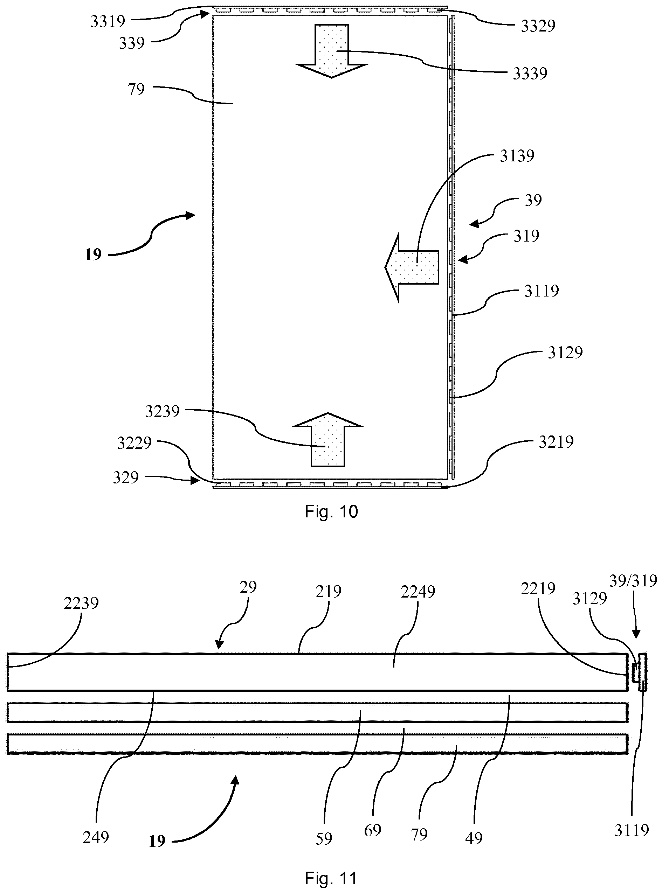

Fig. 9, Fig. 10 und Fig. 11 zeigen ausgewählte Bauteile eines dritten Ausführungsbeispiels eines Leuchtkörpers 19. Der Leuchtkörper 19 ist mit einer Lichtverteilungsplatte 29, einer über einen oberen Luftspalt 49 benachbarte Entblendungsplatte 59 und eine über einen unteren Luftspalt 69 benachbarte Klarplatte 79 sowie mit zwei Leuchtmitteln 39 nämlich einem ersten LED-Leuchtmittel 319 und einem zweiten LED-Leuchtmittel 329 ausgestattet. Diese Bauteile sind identisch wie die entsprechenden Bauteile des in der Fig. 1 gezeigten Leuchtkörpers 1 geformt und und angeordnet.

Insbesondere ist wie oben beschrieben die Lichtverteilungsplatte 29 quaderförmig mit einer rechteckigen Oberfläche 219, einer der Oberfläche 219 entsprechenden Unterfläche 249 und vier die Oberfläche 219 mit der Unterfläche 249 verbindenden Randflächen 229 ausgebildet. Die Randflächen 229 bestehen aus einer ersten Randfläche 2219 und einer dritten Randfläche 2239, die sich jeweils zwischen zwei Längsseiten der Oberfläche 219 und der Unterfläche 249 erstrecken, sowie einer zweiten Randfläche 2229 und einer vierten Randfläche 2249, die sich jeweils zwischen zwei Breitseiten der Oberfläche 219 und der Unterfläche 249 erstrecken.

Entlang der ersten Randfläche 2219 ist das erste LED-Leuchtmittel 319 angeordnet. Es umfasst eine längsförmige Platine 3119, die mit einer Serie von zwanzig in einer geraden Linie aufgereihten Leuchtdioden 3129 bestückt ist. Die Leuchtdioden 3129 des ersten LED-Leuchtmittels 319 sind zur ersten Randfläche 2219 hin ausgerichtet, sodass von ihnen abgestrahltes Licht auf die erste Randfläche 2219 trifft und durch sie hindurch in das Innere der Lichtverteilungsplatte 29 dringt. Entlang der zweiten Randfläche 2229 ist das zweite LED-Leuchtmittel 329 angeordnet. Es umfasst ebenfalls eine längsförmige Platine 3219, die mit einer Serie von zehn in einer geraden Linie aufgereihten Leuchtdioden 3229 bestückt ist. Die Leuchtdioden 3229 des zweiten LED-Leuchtmittels 329 sind zu der zweiten Randfläche 2229 hin ausgerichtet, sodass von ihnen abgestrahltes Licht auf die zweite Randfläche 2229 trifft und durch sie hindurch in das Innere der Lichtverteilungsplatte 29 dringt.

Zusätzlich zum ersten LED-Leuchtmittel 319 und zum zweiten LED-Leuchtmittel 329 umfasst der Leuchtkörper 19 ein drittes LED-Leuchtmittel 339, das der vierten Randfläche 2249 der Lichtverteilungsplatte 29 zugeordnet ist. Dabei ist das dritte LED-Leuchtmittel 339 entlang der vierten Randfläche 2249 angeordnet. Es umfasst eine längsförmige Platine 3319, die mit einer Serie von zehn in einer geraden Linie aufgereihten Leuchtdioden 3329 bestückt ist. Die Leuchtdioden 3329 des dritten LED-Leuchtmittels 339 sind zur vierten Randfläche 2249 hin ausgerichtet, sodass von ihnen abgestrahltes Licht auf die vierte Randfläche 2249 trifft und durch sie hindurch in das Innere der Lichtverteilungsplatte 29 dringt. Mit seinen ersten, zweiten und dritten Leuchtmitteln 319/329/339 ist der Leuchtkörper 19 C-förmig ausgestaltet.

Die Leuchtdioden 3129 des ersten LED-Leuchtmittels 319 sind zu der ersten Randfläche 2219 hin ausgerichtet, sodass von ihnen abgestrahltes Licht entlang einer ersten Hauptabstrahlrichtung 3139 des ersten LED-Leuchtmittels 319 auf die erste Randfläche 2219 trifft und durch diese hindurch in das Innere der Lichtverteilungsplatte 29 dringt. Die erste Hauptabstrahlrichtung 3139 des ersten LED-Leuchtmittels 319 ist rechtwinklig zu seiner Platine 3119 und rechtwinklig zur ersten Randfläche 2219 angeordnet. Die Leuchtdioden 3229 des zweiten LED-Leuchtmittels 329 sind zu der zweiten Randfläche 2229 hin ausgerichtet, sodass von ihnen abgestrahltes Licht entlang einer zweiten Hauptabstrahlrichtung 3239 des zweiten LED-Leuchtmittels 329 auf die zweite Randfläche 2229 trifft und durch diese hindurch in das Innere der Lichtverteilungsplatte 29 dringt. Die zweite Hauptabstrahlrichtung 3239 des zweiten LED-Leuchtmittels 329 ist rechtwinklig zu seiner Platine 3219 und rechtwinklig zur ersten Randfläche 2229 angeordnet. Die Leuchtdioden 3329 des dritten LED-Leuchtmittels 339 sind zu der vierten Randfläche 2249 hin ausgerichtet, sodass von ihnen abgestrahltes Licht entlang einer dritten Hauptabstrahlrichtung 3339 des dritten LED-Leuchtmittels 339 auf die vierte Randfläche 2249 trifft und durch diese hindurch in das Innere der Lichtverteilungsplatte 29 dringt. Die dritte Hauptabstrahlrichtung 3339 des dritten LED-Leuchtmittels 339 ist rechtwinklig zu seiner Platine 3319 und rechtwinklig zur vierten Randfläche 2249 angeordnet.

Die Leuchtdioden 3129/3229/3329 weisen alle eine rechteckige Grundform auf. Der dritten Randfläche 2239 der Lichtverteilungsplatte 29 ist kein Leuchtmittel zugeordnet, sodass im Wesentlichen kein Licht durch sie hindurch in das Innere der Lichtverteilungsplatte 29 dringt.

Weiter weist die Lichtverteilungsplatte 29 eine Auslenkstruktur 239 mit einer linken ersten Auslenkelementgruppe 2319 und rechten zweiten Auslenkelementgruppe 2329 auf. Die erste Auslenkelementgruppe 2319 und die zweite Auslenkelementgruppe 2329 weisen jeweils fünf Reihen mit jeweils acht Auslenkelementen auf. Die Auslenkelemente der ersten Auslenkelementgruppe 2319 und die Auslenkelemente der zweiten Auslenkelementgruppe 2329 sind gegenläufig quasi diagonal in der Lichtverteilungsplatte 29 angeordnet.

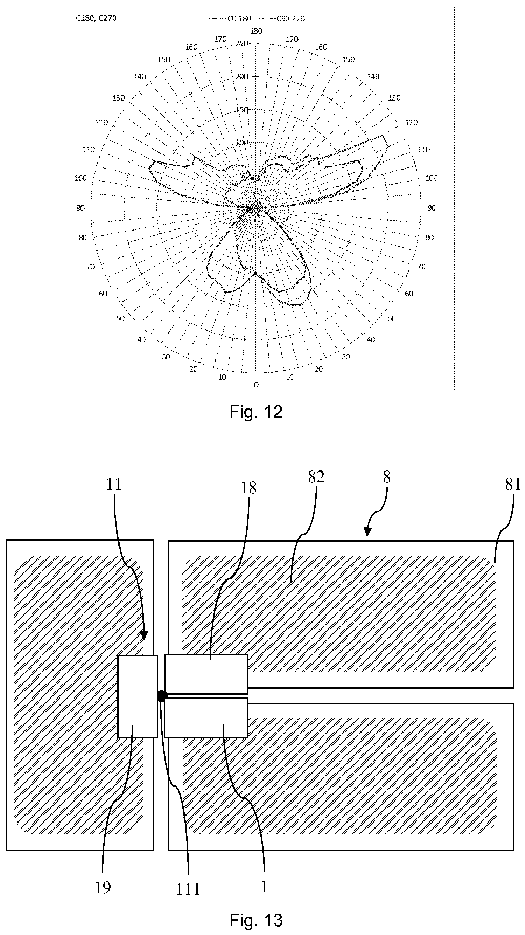

Im Betrieb des Leuchtkörpers 19 wird Licht von den drei LED-Leuchtmitteln 39 von drei Seiten her in die Lichtverteilungsplatte 29 horizontal eingestrahlt. Die Umlenkelemente der Auslenkstruktur 239 sind so ausgebildet, dass das Licht nach oben und nach unten in einem vordefinierten Verhältnis aus der Lichtverteilungsplatte 29 ausgestrahlt wird. Dabei lenken erste Umlenkelementgruppe 2319 und die zweite Umlenkelementgruppe 2329 das Licht zusammen dreiseitig um, sodass zusätzlich begünstigt durch die dreiseitige Lichteinspeisung von der Lichtverteilungsplatte 29 eine dreifach asymmetrische LVK erzeugt wird. Wie in der in Fig. 12 dargestellten LVK ersichtlich ist, wird vom Lichtkörper 19 ein Anteil des gesamten Lichts als Indirektlicht nach oben und ein Anteil des gesamten Lichts als Direktlicht nach unten dreifach asymmetrisch abgestrahlt. Beispielsweise kann der Leuchtkörper 19 dadurch zum zentralen Aufstellen vor einem auszuleuchtenden Arbeitsplatz vorgesehen sein.

In Fig. 13 ist ein Ausführungsbeispiel einer erfindungsgemässen Stehleuchtenanordnung 11 gezeigt. Die Stehleuchtenanordnung 11 umfasst einen auf einem Boden aufstellbaren Tragständer und ein Adapterteil 111, das flexibel mit Leuchten bestückt werden kann. In der in Fig. 12 dargestellten Form ist die Stehleuchtenanordnung mit dem in Fig. 1 gezeigten Leuchtkörper 1, dem in Fig. 9 gezeigten Leuchtkörper 19 und einem vierten Ausführungsbeispiel eines Leuchtkörpers 18 bestückt. Der Leuchtkörper 18 ist identisch wie der Leuchtkörper 1 ausgestaltet, ausser dass er dazu ausgebildet ist, Licht in andere Richtungen doppelt asymmetrisch abzugeben. Er ist also im Vergleich zum Leuchtkörper1 gespiegelt.

Die Stehleuchtenanordnung 11 ist so konfiguriert, dass damit bestimmungsgemäss Arbeitsoberflächen 818 von drei Schreibtischen 88 ausgeleuchtet werden können. Die Schreibtische 88 sind zu einem Rechteck zusammengestellt, wobei die Stehleuchtenanordnung 11 zentral aufgestellt ist. Zusammen erzeugen die Leuchtkörper 1/18/19 Licht, mit dem Bereiche 828 ausgeleuchtet wird, die zusammen im Wesentlichen die ganzen Arbeitsoberflächen 818 der Schreibtische 88 umfasst.

Obwohl die Erfindung mittels der Figuren und der zugehörigen Beschreibung dargestellt und detailliert beschrieben ist, sind diese Darstellung und diese detaillierte Beschreibung illustrativ und beispielhaft zu verstehen und nicht als die Erfindung einschränkend. Um die Erfindung nicht zu verklären, können in gewissen Fällen wohlbekannte Strukturen und Techniken nicht im Detail gezeigt und beschrieben sein. Es versteht sich, dass Fachleute Änderungen und Abwandlungen machen können, ohne den Umfang der folgenden Ansprüche zu verlassen.

Die vorliegende Offenbarung umfasst auch Ausführungsformen mit jeglicher Kombination von Merkmalen, die vorstehend oder nachfolgend zu verschiedenen Ausführungsformen genannt oder gezeigt sind. Sie umfasst ebenfalls einzelne Merkmale in den Figuren, auch wenn sie dort im Zusammenhang mit anderen Merkmalen gezeigt sind und/oder vorstehend oder nachfolgend nicht genannt sind. Auch können die in den Figuren und der Beschreibung beschriebenen Alternativen von Ausführungsformen und einzelne Alternativen deren Merkmale von den offenbarten Gegenständen ausgeschlossen sein. Die Offenbarung umfasst Ausführungsformen, die ausschliesslich die in den Ansprüchen beziehungsweise in den Ausführungsbeispielen beschriebenen Merkmale umfasst sowie auch solche, die zusätzliche andere Merkmale umfassen.

Im Weiteren schliesst der Ausdruck "umfassen" und Ableitungen davon andere Elemente oder Schritte nicht aus. Ebenfalls schliesst der unbestimmte Artikel "ein" bzw. "eine" und Ableitungen davon eine Vielzahl nicht aus. Die Funktionen mehrerer in den Ansprüchen aufgeführter Merkmale können durch eine Einheit beziehungsweise einen Schritt erfüllt sein. Die Begriffe "im Wesentlichen", "etwa", "ungefähr" und dergleichen in Verbindung mit einer Eigenschaft beziehungsweise einem Wert definieren insbesondere auch genau die Eigenschaft beziehungsweise genau den Wert. Die Begriffe "etwa" und "ungefähr" im Zusammenhang mit einem gegebenen Zahlenwert oder -bereich kann sich auf einen Wert beziehungsweise Bereich beziehen, der innerhalb 20%, innerhalb 10%, innerhalb 5% oder innerhalb 2% des gegebenen Werts beziehungsweise Bereichs liegt. Alle Bezugszeichen in den Ansprüchen sind nicht als den Umfang der Ansprüche einschränkend zu verstehen.

## Patentansprüche

1. Stehleuchtenanordnung (11) mit einem auf einem Boden aufstellbaren Tragständer, einem Adapterteil (111) und mindestens einem Leuchtkörper (1; 10; 18; 19) mit einem längsförmig ausgebildeten ersten Leuchtmittel (31; 310A, 310B; 319) und einer Lichtverteilungsplatte (2; 20A, 20B; 29), wobei das Adapterteil (111) dazu ausgestaltet ist, den mindestens einen Leuchtkörper (1; 10; 18; 19) am Tragständer zu befestigen, wobei die Lichtverteilungsplatte (2; 20A, 20B; 29) eine Oberfläche (21; 210A, 210B; 29), eine der Oberfläche (21; 210A, 210B; 29) entsprechende Unterfläche (24; 240A, 240B; 249) und die Oberfläche (21; 210A, 210B; 29) mit der Unterfläche (24; 240A, 240B; 249) verbindende Randflächen (22; 220A, 220B; 229) aufweist,
das erste Leuchtmittel (31; 310A, 310B; 319) einer ersten der Randflächen (22; 220A, 220B; 229) der Lichtverteilungsplatte (2; 20A, 20B; 29) zugeordnet ist, sodass vom ersten Leuchtmittel (31; 310A, 310B; 319) abgestrahltes Licht durch die erste Randfläche (221; 2210A, 2210B; 2219) in die Lichtverteilungsplatte (2; 20A, 20B; 29) einstrahlbar ist, wobei sich das erste Leuchtmittel (31; 310A, 310B; 319) entlang der ersten Randfläche (22; 220A, 220B; 229) erstreckt,
die Lichtverteilungsplatte (2; 20A, 20B; 29) eine Auslenkstruktur (23; 230; 239) umfasst, mit der das vom ersten Leuchtmittel (31; 310A, 310B; 319) abgestrahlte und durch die erste Randfläche (221; 2210A, 2210B; 2219) in die Lichtverteilungsplatte (2; 20A, 20B; 29) eingestrahlte Licht umleitbar ist, sodass es durch die Oberfläche (21; 210A, 210B; 29) oder die Unterfläche (24; 240A, 240B; 249) der Lichtverteilungsplatte (2; 20A, 20B; 29) abgestrahlt wird,
die Auslenkstruktur (23; 230; 239) der Lichtverteilungsplatte (2; 20A, 20B; 29) schräg zu einer ersten Hauptabstrahlrichtung (313; 3130B; 3139) des ersten Leuchtmittels (31; 310A, 310B; 319) ausgerichtet ist,
ein zweites Leuchtmittel (32; 320A, 320B; 329) einer zweiten der Randflächen (22; 220A, 220B; 229) der Lichtverteilungsplatte (2; 20A, 20B; 29) zugeordnet ist, sodass vom zweiten Leuchtmittel (32; 320A, 320B; 329) abgestrahltes Licht durch die zweite Randfläche (22; 220A, 220B; 229) in die Lichtverteilungsplatte (2; 20A, 20B; 29) einstrahlbar ist,
das vom zweiten Leuchtmittel (32; 320A, 320B; 329) abgestrahlte und durch die zweite Randfläche (22; 220A, 220B; 229) in die Lichtverteilungsplatte (2; 20A, 20B; 29) eingestrahlte Licht durch die Auslenkstruktur (23; 230; 239) der Lichtverteilungsplatte (2; 20A, 20B; 29) umleitbar ist, sodass es durch die Oberfläche (21; 210A, 210B; 29) oder die Unterfläche (24; 240A, 240B; 249) der Lichtverteilungsplatte (2; 20A, 20B; 29) abgestrahlt wird,
die Auslenkstruktur (23; 230; 239) der Lichtverteilungsplatte (2; 20A, 20B; 29) schräg zu einer zweiten Hauptabstrahlrichtung (323; 3230B; 3239) des zweiten Leuchtmittels (32; 320A, 320B; 329) ausgerichtet ist, und
einer dritten der Randflächen (22; 220A, 220B; 229) der Lichtverteilungsplatte (2; 20A, 20B; 29) kein Leuchtmittel (3; 30; 39) zugeordnet ist, **dadurch gekennzeichnet, dass** die zweite Randfläche (22; 220A, 220B; 229) an die erste Randfläche (22; 220A, 220B; 229) der Lichtverteilungsplatte (2; 20A, 20B; 29) angrenzt und sich das zweite Leuchtmittel (32; 320A, 320B; 329) entlang der zweiten Randfläche (22; 220A, 220B; 229) erstreckt.

2. Stehleuchtenanordnung (11) nach Anspruch 1, bei der einer vierten der Randflächen (22; 220A, 220B; 229) der Lichtverteilungsplatte (2; 20A, 20B; 29) des Leuchtkörpers (1; 10; 18; 19) kein Leuchtmittel (3; 30; 39) zugeordnet ist.

3. Stehleuchtenanordnung (11) nach Anspruch 1, bei welcher der Leuchtkörper (1; 10; 18; 19) ein drittes Leuchtmittel (339) umfasst, das einer vierten der Randflächen (22; 220A, 220B; 229) der Lichtverteilungsplatte (2; 20A, 20B; 29) des Leuchtkörpers (1; 10; 18; 19) zugeordnet ist, sodass vom dritten Leuchtmittel (339) abgestrahltes Licht durch die vierte Randfläche (224; 2240A, 2240B; 2249) in die Lichtverteilungsplatte (2; 20A, 20B; 29) einstrahlbar ist, wobei
das vom dritten Leuchtmittel (339) abgestrahlte und durch die vierte Randfläche (224; 2240A, 2240B; 2249) in die Lichtverteilungsplatte (2; 20A, 20B; 29) des Leuchtkörpers (1; 10; 18; 19) eingestrahlte Licht durch die Auslenkstruktur (23; 230; 239) der Lichtverteilungsplatte (2; 20A, 20B; 29) umleitbar ist, sodass es durch die Oberfläche (21; 210A, 210B; 29) oder die Unterfläche (24; 240A, 240B; 249) der Lichtverteilungsplatte (2; 20A, 20B; 29) abgestrahlt wird, und
die Auslenkstruktur (23; 230; 239) der Lichtverteilungsplatte (2; 20A, 20B; 29) schräg zu einer dritten Hauptabstrahlrichtung (3339) des dritten Leuchtmittels (339) ausgerichtet ist.

4. Stehleuchtenanordnung (11) nach einem der vorangehenden Ansprüche, bei der die Oberfläche (21; 210A, 210B; 29) der Lichtverteilungsplatte (2; 20A, 20B; 29) des Leuchtkörpers (1; 10; 18; 19) und die Unterfläche (24; 240A, 240B; 249) der Lichtverteilungsplatte (2; 20A, 20B; 29) des Leuchtkörpers (1; 10; 18; 19) jeweils eine im Wesentlichen rechteckige Grundform aufweisen.

5. Stehleuchtenanordnung (11) einem der vorangehenden Ansprüche, bei der die Randflächen (22; 220A, 220B; 229) vier, fünf oder sechs jeweils die Oberfläche (21; 210A, 210B; 29) mit der Unterfläche (24; 240A, 240B; 249) verbindende Randflächen (22; 220A, 220B; 229) umfassen.

6. Stehleuchtenanordnung (11) nach einem der vorangehenden Ansprüche, bei der die Auslenkstruktur (23; 230; 239) der Lichtverteilungsplatte (2; 20A, 20B; 29) des Leuchtkörpers (1; 10; 18; 19) dazu ausgebildet ist, durch die Randflächen (22; 220A, 220B; 229) eingestrahltes Licht so umzuleiten, dass es sowohl durch die Oberfläche (21; 210A, 210B; 29) als auch durch die Unterfläche (24; 240A, 240B; 249) der Lichtverteilungsplatte (2; 20A, 20B; 29) des Leuchtkörpers (1; 10; 18; 19) abstrahlbar ist.

7. Stehleuchtenanordnung (11) nach einem Ansprüche 1 bis 5, bei welcher der Leuchtkörper (1; 10; 18; 19) ein weiteres erstes Leuchtmittel (31; 310A, 310B; 319) und eine weitere Lichtverteilungsplatte (2; 20A, 20B; 29) umfasst, wobei
die weitere Lichtverteilungsplatte (2; 20A, 20B; 29) eine weitere Oberfläche (21; 210A, 210B; 29), eine der weiteren Oberfläche (21; 210A, 210B; 29) entsprechende weitere Unterfläche (24; 240A, 240B; 249) und die weitere Oberfläche (21; 210A, 210B; 29) mit der weiteren Unterfläche (24; 240A, 240B; 249) verbindende weitere Randflächen (22; 220A, 220B; 229) aufweist,
die Unterfläche (24; 240A, 240B; 249) der Lichtverteilungsplatte (2; 20A, 20B; 29) benachbart zur weiteren Oberfläche (21; 210A, 210B; 29) der weiteren Lichtverteilungsplatte (2; 20A, 20B; 29) angeordnet ist,
das weitere erste Leuchtmittel (31; 310A, 310B; 319) einer ersten der weiteren Randflächen (22; 220A, 220B; 229) der weiteren Lichtverteilungsplatte (2; 20A, 20B; 29) zugeordnet ist, sodass vom weiteren ersten Leuchtmittel (31; 310A, 310B; 319) abgestrahltes Licht durch die weitere erste Randfläche (221; 2210A, 2210B; 2219) in die weitere Lichtverteilungsplatte (2; 20A, 20B; 29) einstrahlbar ist,
die Auslenkstruktur (23; 230; 239) der Lichtverteilungsplatte (2; 20A, 20B; 29) dazu ausgebildet ist, das vom ersten Leuchtmittel (31; 310A, 310B; 319) abgestrahlte und durch die erste Randfläche (221; 2210A, 2210B; 2219) in die Lichtverteilungsplatte (2; 20A, 20B; 29) eingestrahlte Licht so umzuleiten, sodass es durch die Oberfläche (21; 210A, 210B; 29) der Lichtverteilungsplatte (2; 20A, 20B; 29) abgestrahlt wird,
die weitere Lichtverteilungsplatte (2; 20A, 20B; 29) eine weitere Auslenkstruktur (23; 230; 239) umfasst, mit der das vom weiteren ersten Leuchtmittel (31; 310A, 310B; 319) abgestrahlte und durch die weitere erste Randfläche (221; 2210A, 2210B; 2219) in die weitere Lichtverteilungsplatte (2; 20A, 20B; 29) eingestrahlte Licht umleitbar ist, sodass es durch die weitere Unterfläche (24; 240A, 240B; 249) der Lichtverteilungsplatte (2; 20A, 20B; 29) abgestrahlt wird, und
die weitere Auslenkstruktur (23; 230; 239) der weiteren Lichtverteilungsplatte (2; 20A, 20B; 29) schräg zu einer ersten Hauptabstrahlrichtung (313; 3130B; 3139) des weiteren ersten Leuchtmittels (31; 310A, 310B; 319) ausgerichtet ist.

8. Stehleuchtenanordnung (11) nach einem der vorangehenden Ansprüche, bei der die Auslenkstruktur (23; 230; 239) der Lichtverteilungsplatte (2; 20A, 20B; 29) des Leuchtkörpers (1; 10; 18; 19) Reflektorflächen und/oder Refraktorflächen umfasst.

9. Stehleuchtenanordnung (11) nach einem der vorangehenden Ansprüche, bei welcher der Leuchtkörper (1; 10; 18; 19) eine Entblendungsplatte (5; 50; 59) umfasst, die parallel zur Oberfläche (21; 210A, 210B; 29) oder Unterfläche (24; 240A, 240B; 249) der Lichtverteilungsplatte (2; 20A, 20B; 29) angeordnet ist, wobei zwischen Lichtverteilungsplatte (2; 20A, 20B; 29) und Entblendungsplatte (5; 50; 59) ein Luftspalt (4; 40; 49) angeordnet ist.

10. Stehleuchtenanordnung (11) nach einem der vorangehenden Ansprüche, bei welcher der Leuchtkörper (1; 10; 18; 19) eine Klarplatte (7; 70; 79) umfasst, die parallel zur Oberfläche (21; 210A, 210B; 29) oder Unterfläche (24; 240A, 240B; 249) der Lichtverteilungsplatte (2; 20A, 20B; 29) angeordnet ist, wobei zwischen Klarplatte (7; 70; 79) und Lichtverteilungsplatte (2; 20A, 20B; 29) ein Luftspalt (6; 60; 69) angeordnet ist.

11. Stehleuchtenanordnung (11) nach Anspruch 9 und 10, wobei die Entblendungsplatte (5; 50; 59) zwischen der Lichtverteilungsplatte (2; 20A, 20B; 29) und der Klarplatte (7; 70; 79) angeordnet ist, wobei einer der Luftspalte (4, 6; 40, 60; 49, 69) zwischen Lichtverteilungsplatte (2; 20A, 20B; 29) und Entblendungsplatte (5; 50; 59) und einer der Luftspalte (4, 6; 40, 60; 49, 69) zwischen der Entblendungsplatte (5; 50; 59) und der Klarplatte (7; 70; 79) liegt.

## Claims

1. A standing lamp assembly (11) having a support stand that can be set up on a base surface, an adapter part (111), and at least one light fixture (1; 10; 18; 19) with an elongated first illuminant (31; 310A, 310B; 319) and a light distribution panel (2; 20A, 20B; 29), wherein the adapter part (111) is designed for fastening the at least one light fixture (1; 10; 18; 19) to the support stand,
wherein
the light distribution panel (2; 20A, 20B; 29) has an upper surface (21; 210A, 210B; 29), a lower surface (24; 240A, 240B; 249) corresponding to the upper surface (21; 210A, 210B; 29), and edge surfaces (22; 220A, 220B; 229) that connect the upper surface (21; 210A, 210B; 29) to the lower surface (24; 240A, 240B; 249),
the first illuminant (31; 310A, 310B; 319) is associated with a first of the edge surfaces (22; 220A, 220B; 229) of the light distribution panel (2; 20A, 20B; 29), so that light irradiated by the first illuminant (31; 310A, 310B; 319) can be radiated through the first edge surface (221; 2210A, 2210B; 2219) into the light distribution panel (2; 20A, 20B; 29), wherein the first illuminant (31; 310A, 310B; 319) extends along the first edge surface (22; 220A, 220B; 229),
the light distribution panel (2; 20A, 20B; 29) comprises a deflecting structure (23; 230; 239) via which the light irradiated by the first illuminant (31; 310A, 310B; 319) and radiated through the first edge surface (221; 2210A, 2210B; 2219) into the light distribution panel (2; 20A, 20B; 29) is deflectable so that it is irradiated through the upper surface (21; 210A, 210B; 29) or the lower surface (24; 240A, 240B; 249) of the light distribution panel (2; 20A, 20B; 29),
the deflecting structure (23; 230; 239) of the light distribution panel (2; 20A, 20B; 29) is oriented at an angle relative to a first main irradiation direction (313; 3130B; 3139) of the first illuminant (31; 310A, 310B; 319),
a second illuminant (32; 320A, 320B; 329) is associated with a second of the edge surfaces (22; 220A, 220B; 229) of the light distribution panel (2; 20A, 20B; 29), so that light irradiated by the second illuminant (32; 320A, 320B; 329) can be radiated through the second edge surface (22; 220A, 220B; 229) into the light distribution panel (2; 20A, 20B; 29),
the light irradiated by the second illuminant (32; 320A, 320B; 329) and radiated through the second edge surface (22; 220A, 220B; 229) into the light distribution panel (2; 20A, 20B; 29) is deflectable by the deflecting structure (23; 230; 239) of the light distribution panel (2; 20A, 20B; 29), so that it is irradiated through the upper surface (21; 210A, 210B; 29) or the lower surface (24; 240A, 240B; 249) of the light distribution panel (2; 20A, 20B; 29),
the deflecting structure (23; 230; 239) of the light distribution panel (2; 20A, 20B; 29) is oriented at an angle relative to a second main irradiation direction (323; 3230B; 3239) of the second illuminant (32; 320A, 320B; 329), and
no illuminant (3; 30; 39) is associated with a third of the edge surfaces (22; 220A, 220B; 229) of the light distribution panel (2; 20A, 20B; 29), **characterized in that** the second edge surface (22; 220A, 220B; 229) adjoins the first edge surface (22; 220A, 220B; 229) of the light distribution panel (2; 20A, 20B; 29), and the second illuminant (32; 320A, 320B; 329) extends along the second edge surface (22; 220A, 220B; 229).

2. The standing lamp assembly (11) according to Claim 1, wherein no illuminant (3; 30; 39) is associated with a fourth of the edge surfaces (22; 220A, 220B; 229) of the light distribution panel (2; 20A, 20B; 29) of the light fixture (1; 10; 18; 19).

3. The standing lamp assembly (11) according to Claim 1, wherein the light fixture (1; 10; 18; 19) comprises a third illuminant (339) that is associated with a fourth of the edge surfaces (22; 220A, 220B; 229) of the light distribution panel (2; 20A, 20B; 29) of the light fixture (1; 10; 18; 19), so that light irradiated by the third illuminant (339) can be radiated through the fourth edge surface (224; 2240A, 2240B; 2249) into the light distribution panel (2; 20A, 20B; 29), wherein
the light irradiated by the third illuminant (339) and radiated through the fourth edge surface (224; 2240A, 2240B; 2249) into the light distribution panel (2; 20A, 20B; 29) of the light fixture (1; 10; 18; 19) is deflectable by the deflecting structure (23; 230; 239) of the light distribution panel (2; 20A, 20B; 29), so that it is irradiated through the upper surface (21; 210A, 210B; 29) or the lower surface (24; 240A, 240B; 249) of the light distribution panel (2; 20A, 20B; 29), and
the deflecting structure (23; 230; 239) of the light distribution panel (2; 20A, 20B; 29) is oriented at an angle relative to a third main irradiation direction (3339) of the third illuminant (339).

4. The standing lamp assembly (11) according to one of the preceding claims, wherein the upper surface (21; 210A, 210B; 29) of the light distribution panel (2; 20A, 20B; 29) of the light fixture (1; 10; 18; 19) and the lower surface (24; 240A, 240B; 249) of the light distribution panel (2; 20A, 20B; 29) of the light fixture (1; 10; 18; 19) each have an essentially rectangular basic shape.

5. The standing lamp assembly (11) [according to] one of the preceding claims, wherein the edge surfaces (22; 220A, 220B; 229) comprise four, five, or six edge surfaces (22; 220A, 220B; 229) which respectively connect the upper surface (21; 210A, 210B; 29) to the lower surface (24; 240A, 240B; 249) .

6. The standing lamp assembly (11) according to one of the preceding claims, wherein the deflecting structure (23; 230; 239) of the light distribution panel (2; 20A, 20B; 29) of the light fixture (1; 10; 18; 19) is designed to deflect light that is radiated through the edge surfaces (22; 220A, 220B; 229) in such a way that it can be irradiated both through the upper surface (21; 210A, 210B; 29) and through the lower surface (24; 240A, 240B; 249) of the light distribution panel (2; 20A, 20B; 29) of the light fixture (1; 10; 18; 19).

7. The standing lamp assembly (11) according to one of Claims 1 to 5, wherein the light fixture (1; 10; 18; 19) comprises a further first illuminant (31; 310A, 310B; 319) and a further light distribution panel (2; 20A, 20B; 29), wherein
the further light distribution panel (2; 20A, 20B; 29) has a further upper surface (21; 210A, 210B; 29), a further lower surface (24; 240A, 240B; 249) corresponding to the further upper surface (21; 210A, 210B; 29), and further edge surfaces (22; 220A, 220B; 229) that connect the further upper surface (21; 210A, 210B; 29) to the further lower surface (24; 240A, 240B; 249),
the lower surface (24; 240A, 240B; 249) of the light distribution panel (2; 20A, 20B; 29) is situated adjacent to the further upper surface (21; 210A, 210B; 29) of the further light distribution panel (2; 20A, 20B; 29),
the further first illuminant (31; 310A, 310B; 319) is associated with a first of the further edge surfaces (22; 220A, 220B; 229) of the further light distribution panel (2; 20A, 20B; 29), so that light irradiated by the further first illuminant (31; 310A, 310B; 319) can be radiated through the further first edge surface (221; 2210A, 2210B; 2219) into the further light distribution panel (2; 20A, 20B; 29),
the deflecting structure (23; 230; 239) of the light distribution panel (2; 20A, 20B; 29) is designed to deflect the light that is irradiated by the first illuminant (31; 310A, 310B; 319) and radiated through the first edge surface (221; 2210A, 2210B; 2219) into the light distribution panel (2; 20A, 20B; 29) in such a way that it is irradiated through the upper surface (21; 210A, 210B; 29) of the light distribution panel (2; 20A, 20B; 29),
the further light distribution panel (2; 20A, 20B; 29) comprises a further deflecting structure (23; 230; 239) via which the light that is irradiated by the further first illuminant (31; 310A, 310B; 319) and radiated through the further first edge surface (221; 2210A, 2210B; 2219) in the further light distribution panel (2; 20A, 20B; 29) is deflectable, so that it is irradiated through the further lower surface (24; 240A, 240B; 249) of the light distribution panel (2; 20A, 20B; 29), and
the further deflecting structure (23; 230; 239) of the further light distribution panel (2; 20A, 20B; 29) is oriented at an angle relative to a first main irradiation direction (313; 3130B; 3139) of the further first illuminant (31; 310A, 310B; 319).

8. The standing lamp assembly (11) according to one of the preceding claims, wherein the deflecting structure (23; 230; 239) of the light distribution panel (2; 20A, 20B; 29) of the light fixture (1; 10; 18; 19) comprises reflector surfaces and/or refractor surfaces.

9. The standing lamp assembly (11) according to one of the preceding claims, wherein the light fixture (1; 10; 18; 19) comprises a glare suppression panel (5; 50; 59) situated in parallel to the upper surface (21; 210A, 210B; 29) or lower surface (24; 240A, 240B; 249) of the light distribution panel (2; 20A, 20B; 29), wherein an air gap (4; 40; 49) is situated between the light distribution panel (2; 20A, 20B; 29) and the glare suppression panel (5; 50; 59).

10. The standing lamp assembly (11) according to one of the preceding claims, wherein the light fixture (1; 10; 18; 19) comprises a transparent panel (7; 70; 79) situated in parallel to the upper surface (21; 210A, 210B; 29) or lower surface (24; 240A, 240B; 249) of the light distribution panel (2; 20A, 20B; 29), wherein an air gap (6; 60; 69) is situated between the transparent panel (7; 70; 79) and the light distribution panel (2; 20A, 20B; 29).

11. The standing lamp assembly (11) according to Claims 9 and 10, wherein the glare suppression panel (5; 50; 59) is situated between the light distribution panel (2; 20A, 20B; 29) and the transparent panel (7; 70; 79), wherein one of the air gaps (4, 6; 40, 60; 49, 69) is situated between the light distribution panel (2; 20A, 20B; 29) and the glare suppression panel (5; 50; 59), and one of the air gaps (4, 6; 40, 60; 49, 69) is situated between the glare suppression panel (5; 50; 59) and the transparent panel (7; 70; 79).

## Revendications

1. Lampadaire (11), comprenant un pied de support à poser sur un sol, un adaptateur (111) et au moins un luminaire (1 ; 10 ; 18 ; 19) avec une première source d'éclairage (31 ; 310A, 310B ; 319) réalisée selon une forme allongée et un panneau distributeur de lumière (2 ; 20A, 20B ; 29), dans lequel l'adaptateur (111) est configuré pour fixer ledit au moins un luminaire (1 ; 10 ; 18 ; 19) au pied de support,
dans lequel
le panneau distributeur de lumière (2 ; 20A, 20B ; 29) présente une surface supérieure (21 ; 210A, 210B ; 29), une surface inférieure (24 ; 240A, 240B ; 249) correspondant à la surface supérieure (21 ; 210A, 210B ; 29) et surfaces de bord (22 ; 220A, 220B ; 229) reliant la surface supérieure (21 ; 210A, 210B ; 29) à la surface inférieure (24 ; 240A, 240B ; 249),
la première source d'éclairage (31 ; 310A, 310B ; 319) est attribuée à une première des surfaces de bord (22 ; 220A, 220B ; 229) du panneau distributeur de lumière (2 ; 20A, 20B ; 29) de sorte que la lumière émise par la première source d'éclairage (31 ; 310A, 310B ; 319) peut être irradiée par la première surface de bord (221 ; 2210A, 2210B ; 2219) dans le panneau distributeur de lumière (2 ; 20A, 20B ; 29), la première source d'éclairage (31 ; 310A, 310B ; 319) s'étendant le long de la première surface de bord (22 ; 220A, 220B ; 229),
le panneau distributeur de lumière (2 ; 20A, 20B ; 29) comprend une structure de déviation (23 ; 230 ; 239) permettant de dévier la lumière émise par la première source d'éclairage (31 ; 310A, 310B ; 319) et irradiée par la première surface de bord (221 ; 2210A, 2210B ; 2219) dans le panneau distributeur de lumière (2 ; 20A, 20B ; 29) de sorte qu'elle est émise par la surface supérieure (21 ; 210A, 210B ; 29) ou la surface inférieure (24 ; 240A, 240B ; 249) du panneau distributeur de lumière (2 ; 20A, 20B ; 29),
la structure de déviation (23 ; 230 ; 239) du panneau distributeur de lumière (2 ; 20A, 20B ; 29) est orientée de manière oblique par rapport à une première direction d'émission principale (313 ; 3130B ; 3139) de la première source d'éclairage (31 ; 310A, 310B ; 319),
une deuxième source d'éclairage (32 ; 320A, 320B ; 329) est attribuée à une deuxième des surfaces de bord (22 ; 220A, 220B ; 229) du panneau distributeur de lumière (2 ; 20A, 20B ; 29) de sorte que la lumière émise par la deuxième source d'éclairage (32 ; 320A, 320B ; 329) peut être irradiée par la deuxième surface de bord (22 ; 220A, 220B ; 229) dans le panneau distributeur de lumière (2 ; 20A, 20B ; 29),
la lumière émise par la deuxième source d'éclairage (32 ; 320A, 320B ; 329) et irradiée par la deuxième surface de bord (22 ; 220A, 220B ; 229) dans le panneau distributeur de lumière (2 ; 20A, 20B ; 29) peut être déviée par la structure de déviation (23 ; 230 ; 239) du panneau distributeur de lumière (2 ; 20A, 20B ; 29) de sorte qu'elle est émise par la surface supérieure (21 ; 210A, 210B ; 29) ou la surface inférieure (24 ; 240A, 240B ; 249) du panneau distributeur de lumière (2 ; 20A, 20B ; 29),
la structure de déviation (23 ; 230 ; 239) du panneau distributeur de lumière (2 ; 20A, 20B ; 29) est orientée de manière oblique par rapport à une deuxième direction d'émission principale (323 ; 3230B ; 3239) de la deuxième source d'éclairage (32 ; 320A, 320B ; 329), et
aucune source d'éclairage (3 ; 30 ; 39) n'est attribuée à une troisième des surfaces de bord (22 ; 220A, 220B ; 229) du panneau distributeur de lumière (2 ; 20A, 20B ; 29),
**caractérisé en ce que** la deuxième surface de bord (22 ; 220A, 220B ; 229) est adjacente à la première surface de bord (22 ; 220A, 220B ; 229) du panneau distributeur de lumière (2 ; 20A, 20B ; 29) et la deuxième source d'éclairage (32 ; 320A, 320B ; 329) s'étend le long de la deuxième surface de bord (22 ; 220A, 220B ; 229).

2. Lampadaire (11) selon la revendication 1, dans lequel aucune source d'éclairage (3 ; 30 ; 39) n'est attribuée à une quatrième des surfaces de bord (22 ; 220A, 220B ; 229) du panneau distributeur de lumière (2 ; 20A, 20B ; 29) de la source d'éclairage (1 ; 10 ; 18 ; 19).

3. Lampadaire (11) selon la revendication 1, dans lequel le luminaire (1 ; 10 ; 18 ; 19) comprend une troisième source d'éclairage (339) qui est attribuée à une quatrième des surfaces de bord (22 ; 220A, 220B ; 229) du panneau distributeur de lumière (2 ; 20A, 20B ; 29) du luminaire (1 ; 10 ; 18 ; 19) de sorte que la lumière émise par la troisième source d'éclairage (339) peut être irradiée par la quatrième surface de bord (224 ; 2240A, 2240B ; 2249) dans le panneau distributeur de lumière (2 ; 20A, 20B ; 29), dans lequel
la lumière émise par la troisième source d'éclairage (339) et irradiée par la quatrième surface de bord (224 ; 2240A, 2240B ; 2249) dans le panneau distributeur de lumière (2 ; 20A, 20B ; 29) du luminaire (1 ; 10 ; 18 ; 19) peut être déviée par la structure de déviation (23 ; 230 ; 239) du panneau distributeur de lumière (2 ; 20A, 20B ; 29) de sorte qu'elle est émise par la surface supérieure (21 ; 210A, 210B ; 29) ou la surface inférieure (24 ; 240A, 240B ; 249) du panneau distributeur de lumière (2 ; 20A, 20B ; 29), et
la structure de déviation (23 ; 230 ; 239) du panneau distributeur de lumière (2 ; 20A, 20B ; 29) est orientée de manière oblique par rapport à une troisième direction d'émission principale (3339) de la troisième source d'éclairage (339).

4. Lampadaire (11) selon l'une quelconque des revendications précédentes, dans lequel la surface supérieure (21 ; 210A, 210B ; 29) du panneau distributeur de lumière (2 ; 20A, 20B ; 29) du luminaire (1 ; 10 ; 18 ; 19) et la surface inférieure (24 ; 240A, 240B ; 249) du panneau distributeur de lumière (2 ; 20A, 20B ; 29) du luminaire (1 ; 10 ; 18 ; 19) présentent respectivement une forme de base substantiellement rectangulaire.

5. Lampadaire (11) selon l'une quelconque des revendications précédentes, dans lequel les surfaces de bord (22 ; 220A, 220B ; 229) comprennent quatre, cinq ou six surfaces de bord (22 ; 220A, 220B ; 229) reliant respectivement la surface supérieure (21 ; 210A, 210B ; 29) à la surface inférieure (24 ; 240A, 240B ; 249).

6. Lampadaire (11) selon l'une quelconque des revendications précédentes, dans lequel la structure de déviation (23 ; 230 ; 239) du panneau distributeur de lumière (2 ; 20A, 20B ; 29) du luminaire (1 ; 10 ; 18 ; 19) est réalisée pour dévier la lumière irradiée par les surfaces de bord (22 ; 220A, 220B ; 229) de telle sorte qu'elle peut être irradiée aussi bien par la surface supérieure (21 ; 210A, 210B ; 29) que par la surface inférieure (24 ; 240A, 240B ; 249) du panneau distributeur de lumière (2 ; 20A, 20B ; 29) du luminaire (1 ; 10 ; 18 ; 19).

7. Lampadaire (11) selon l'une quelconque des revendications 1 à 5, dans lequel le luminaire (1 ; 10 ; 18 ; 19) comprend une première source d'éclairage supplémentaire (31 ; 310A, 310B ; 319) et un panneau distributeur de lumière supplémentaire (2 ; 20A, 20B ; 29), dans lequel
le panneau distributeur de lumière supplémentaire (2 ; 20A, 20B ; 29) présente une surface supérieure supplémentaire (21 ; 210A, 210B ; 29), une surface inférieure supplémentaire (24 ; 240A, 240B ; 249) correspondant à la surface supérieure supplémentaire (21 ; 210A, 210B ; 29) et des surfaces de bord supplémentaires (22 ; 220A, 220B ; 229) reliant la surface supérieure supplémentaire (21 ; 210A, 210B ; 29) à la surface inférieure supplémentaire (24 ; 240A, 240B ; 249),
la surface inférieure (24 ; 240A, 240B ; 249) du panneau distributeur de lumière (2 ; 20A, 20B ; 29) est disposée de manière adjacente à la surface supérieure supplémentaire (21 ; 210A, 210B ; 29) du panneau distributeur de lumière supplémentaire (2 ; 20A, 20B ; 29),
la première source d'éclairage supplémentaire (31 ; 310A, 310B ; 319) d'une première des surfaces de bord supplémentaires (22 ; 220A, 220B ; 229) est attribuée au panneau distributeur de lumière supplémentaire (2 ; 20A, 20B ; 29) de sorte que la lumière émise par la première source d'éclairage supplémentaire (31 ; 310A, 310B ; 319) peut être irradiée par la première surface de bord supplémentaire (221 ; 2210A, 2210B ; 2219) dans le panneau distributeur de lumière supplémentaire (2 ; 20A, 20B ; 29),
la structure de déviation (23 ; 230 ; 239) du panneau distributeur de lumière (2 ; 20A, 20B ; 29) est réalisée pour dévier la lumière émise par la première source d'éclairage (31 ; 310A, 310B ; 319) et irradiée par la première surface de bord (221 ; 2210A, 2210B ; 2219) dans le panneau distributeur de lumière (2 ; 20A, 20B ; 29) de sorte qu'elle est émise par la surface supérieure (21 ; 210A, 210B ; 29) du panneau distributeur de lumière (2 ; 20A, 20B ; 29),
le panneau distributeur de lumière supplémentaire (2 ; 20A, 20B ; 29) comprend une structure de déviation supplémentaire (23 ; 230 ; 239) par laquelle la lumière émise par la première source d'éclairage supplémentaire (31 ; 310A, 310B ; 319) et irradiée par la première surface de bord supplémentaire (221 ; 2210A, 2210B ; 2219) dans le panneau distributeur de lumière supplémentaire (2 ; 20A, 20B ; 29) de sorte qu'elle est émise par la surface inférieure supplémentaire (24 ; 240A, 240B ; 249) du panneau distributeur de lumière (2 ; 20A, 20B ; 29), et
la structure de déviation supplémentaire (23 ; 230 ; 239) du panneau distributeur de lumière supplémentaire (2 ; 20A, 20B ; 29) est orientée de manière oblique par rapport à une première direction d'émission principale (313 ; 3130B ; 3139) de la première source de lumière supplémentaire (31 ; 310A, 310B ; 319).

8. Lampadaire (11) selon l'une quelconque des revendications précédentes, dans lequel la structure de déviation (23 ; 230 ; 239) du panneau distributeur de lumière (2 ; 20A, 20B ; 29) du luminaire (1 ; 10 ; 18 ; 19) comprend des surfaces réfléchissantes et/ou réfringentes.

9. Lampadaire (11) selon l'une quelconque des revendications précédentes, dans lequel le luminaire (1 ; 10 ; 18 ; 19) comprend un panneau anti-éblouissant (5 ; 50 ; 59) disposé en parallèle à la surface supérieure (21 ; 210A, 210B ; 29) ou à la surface inférieure (24 ; 240A, 240B ; 249) du panneau distributeur de lumière (2 ; 20A, 20B ; 29), dans lequel un entrefer (4 ; 40 ; 49) est disposé entre le panneau distributeur de lumière (2 ; 20A, 20B ; 29) et le panneau anti-éblouissant (5 ; 50 ; 59).

10. Lampadaire (11) selon l'une quelconque des revendications précédentes, dans lequel le luminaire (1 ; 10 ; 18 ; 19) comprend un panneau transparent (7 ; 70 ; 79) disposé en parallèle à la surface supérieure (21 ; 210A, 210B ; 29) ou à la surface inférieure (24 ; 240A, 240B ; 249) du panneau distributeur de lumière (2 ; 20A, 20B ; 29), dans lequel un entrefer (6 ; 60 ; 69) est disposé entre le panneau transparent (7 ; 70 ; 79) et le panneau distributeur de lumière (2 ; 20A, 20B ; 29).

11. Lampadaire (11) selon la revendication 9 et 10, dans lequel le panneau anti-éblouissant (5 ; 50 ; 59) est disposé entre le panneau distributeur de lumière (2 ; 20A, 20B ; 29) et le panneau transparent (7 ; 70 ; 79), dans lequel l'un des entrefers (4, 6 ; 40, 60 ; 49, 69) se situe entre le panneau distributeur de lumière (2 ; 20A, 20B ; 29) et le panneau anti-éblouissant (5 ; 50 ; 59) et l'un des entrefers (4, 6 ; 40, 60 ; 49, 69) se situe entre le panneau anti-éblouissant (5 ; 50 ; 59) et le panneau transparent (7 ; 70 ; 79).
